(19) Europäisches Patentamt
European Patent Office
Office européen des brevets

(11) EP 4 653 495 A1

# (12) EUROPEAN PATENT APPLICATION

published in accordance with Art. 153(4) EPC

(43) Date of publication:
**26.11.2025 Bulletin 2025/48**

(21) Application number: **24744674.3**

(22) Date of filing: **17.01.2024**

(51) International Patent Classification (IPC):
***C08L 15/00*** *(2006.01)* ***B60C 1/00*** *(2006.01)*
***C08K 3/04*** *(2006.01)* ***C08K 3/36*** *(2006.01)*
***C08L 9/00*** *(2006.01)*

(52) Cooperative Patent Classification (CPC):
**B60C 1/00; C08K 3/04; C08K 3/36; C08L 9/00; C08L 15/00;** Y02T 10/86

(86) International application number:
**PCT/JP2024/001121**

(87) International publication number:
**WO 2024/154753 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2023 JP 2023006185**

(71) Applicant: **Kuraray Co., Ltd.**
**Kurashiki-shi, Okayama 710-0801 (JP)**

(72) Inventors:
- **KANBARA, Hiroshi**
  **Kamisu-shi, Ibaraki 314-0197 (JP)**
- **KANEKO, Shuhei**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

## (54) RUBBER COMPOSITION AND CROSSLINKED MATERIAL

(57) Provided are: a tire that is produced such that at least a portion thereof is formed from a rubber composition or a crosslinked product of the rubber composition even when the rubber composition contains a highly modified solution-polymerized styrene-butadiene copolymer having a specific content of Si derived from a Si-containing functional group as a solid rubber, which is expected to be improved in low fuel consumption performance, and further contains a fine filler (for example, fine silica) as a filler, the processability is improved, and further the rubber composition or a crosslinked product of the rubber composition has an inherent good elastic modulus; a tire tread formed at least partially using the rubber composition; and a pneumatic tire formed at least partially using the rubber composition. A rubber composition, containing 60 to 150 parts by mass of silica (B1) as a filler (B) and 5 to 30 parts by mass of a liquid conjugated diene-based polymer (C) having a weight average molecular weight in a range of 3,000 to 200,000 with respect to 100 parts by mass of a solid rubber (A) containing 60 mass% or more of a modified solution-polymerized styrene-butadiene copolymer (A1) having a Si-containing functional group, in which a content of Si derived from the Si-containing functional group contained in the modified solution-polymerized styrene-butadiene copolymer (A1) is 220 to 800 ppm, and the silica (B1) has a specific surface area (CTAB) of 180 to 500 $m^2/g$.

EP 4 653 495 A1

## Description

### Technical Field

The present invention relates to a rubber composition and a crosslinked product obtained by crosslinking the rubber composition.

### Background Art

Conventionally, a rubber composition having improved mechanical strength by blending a filler such as silica or carbon black with a solid rubber component such as a natural rubber or a styrene-butadiene rubber has been widely used in, for example, tire applications requiring abrasion resistance and mechanical strength.

For example, for the purpose of improving the dispersibility of such a filler, a rubber composition containing a modified solution-polymerized styrene-butadiene copolymer having a Si-containing functional group as a solid rubber component has been studied (see, for example, Patent Literature 1). The rubber composition containing a solid rubber component in Patent Literature 1 is said to be excellent in interaction with carbon black or silica, good in dispersibility of a filler, and capable of producing a tire excellent in, for example, low heat generation, fracture characteristics, and abrasion resistance.

In recent years, as a rubber composition to be used in tire applications, from the viewpoint of, for example, reducing carbon dioxide emissions, there has been a demand for further improvement in low fuel consumption performance for tires, such as reduction in energy loss derived from tires and thinning of tires.

In addition, in order to achieve reduction in carbon dioxide emissions from another viewpoint, an automobile (for example, an electric automobile, a hybrid automobile, or a hydrogen fuel cell automobile) in which a part or all of driving by an internal combustion engine (engine) that emits carbon dioxide is replaced with electric motor driving has been studied. In order to realize electric motor driving, these automobiles need to further include a power storage battery in each case. An increase in vehicle weight due to, for example, the addition of a battery is a problem, and it is also required that tires cope with this.

### Citation List

#### Patent Literature

Patent Literature 1: WO 2009/133888 A

### Summary of Invention

#### Technical Problem

Among the problems described above, in order to achieve reduction in energy loss derived from tires, it is conceivable that the dispersibility of silica is further improved. One conceivable means for achieving this is to increase the concentration of a Si-containing functional group in the modified solution-polymerized styrene-butadiene copolymer having a Si-containing functional group used as a solid rubber component of a rubber composition (to use a highly modified solution-polymerized styrene-butadiene copolymer).

In addition, in order to cope with thinning of a tire and an increase in vehicle weight of an automobile, it is considered effective to increase the elasticity of a tire material. As a means for increasing the elasticity of a tire material, it is conceivable to use a fine filler (for example, fine silica) having a small particle size as the filler contained in the rubber composition to be the tire material. From these, as a means for reducing carbon dioxide emissions from an automobile, it is conceivable to study a rubber composition containing a highly modified solution-polymerized styrene-butadiene copolymer having a high Si-containing functional group concentration as a solid rubber component and further containing a fine filler (for example, fine silica) as a filler as a rubber composition to be used as a tire material.

However, according to the study of the present inventors, it has been found that, in order to produce a rubber composition containing the highly modified solution-polymerized styrene-butadiene copolymer described above and a fine filler (for example, fine silica), even if each component is tried to be kneaded, kneading is sometimes difficult.

For example, even when components other than, for example, a crosslinking component are kneaded with, for example, a Banbury mixer, the increase in Mooney viscosity during the kneading is remarkable, and it is difficult to sufficiently increase the rotational speed. In addition, it may be difficult to take a sufficient kneading time in order to improve dispersion of each component. In addition, after kneading with the Banbury mixer, a sheet is formed with a roll in order to cool the rubber composition, but this sheet is easy to tear, and the productivity may be deteriorated. In addition, even when

a component such as a crosslinking component is tried to be kneaded by roll kneading, a sheet formed by rolling is easy to tear, and it may be difficult to sufficiently knead the component by roll kneading.

The present invention has been made in view of the above circumstances, and the present invention provides: a tire that is produced such that at least a portion thereof is formed from a rubber composition or a crosslinked product of the rubber composition even when the rubber composition contains a highly modified solution-polymerized styrene-butadiene copolymer having a specific content of Si derived from a Si-containing functional group as a solid rubber, which is expected to be improved in low fuel consumption performance, and further contains a fine filler (for example, fine silica) as a filler, the processability is improved, and further the rubber composition or a crosslinked product of the rubber composition has an inherent good elastic modulus; a tire tread formed at least partially using the rubber composition; and a pneumatic tire formed at least partially using the rubber composition.

Solution to Problem

As a result of intensive studies, the present inventors have found that the above problems can be solved by incorporating a specific liquid conjugated diene-based polymer in a rubber composition containing a modified solution-polymerized styrene-butadiene copolymer having a Si-containing functional group in a certain content ratio or more as a solid rubber, and further containing silica having a specified specific surface area as a filler, and thus completed the present invention.

That is, the present invention relates to the following [1] to [11].

[1] A rubber composition, containing 60 to 150 parts by mass of silica (B1) as a filler (B) and 5 to 30 parts by mass of a liquid conjugated diene-based polymer (C) having a weight average molecular weight in a range of 3,000 to 200,000 with respect to 100 parts by mass of a solid rubber (A) containing 60 mass% or more of a modified solution-polymerized styrene-butadiene copolymer (A1) having a Si-containing functional group, in which

a content of Si derived from the Si-containing functional group contained in the modified solution-polymerized styrene-butadiene copolymer (A1) is 220 to 800 ppm, and
the silica (B1) has a specific surface area (CTAB) of 180 to 500 $m^2/g$.

[2] The rubber composition according to [1], in which when an average content of Si derived from the Si-containing functional group in the solid rubber (A) is denoted by X ppm, and a total specific surface area of the silica (B1) per 1 $cm^3$ of the rubber composition is denoted by Y $m^2/cm^3$, a value of $X \times Y$ satisfies 9,000 or more.
[3] The rubber composition according to [1] or [2], in which the liquid conjugated diene-based polymer (C) has a melt viscosity at 38°C of 0.1 to 2,000 Pa·s.
[4] The rubber composition according to any one of [1] to [3], in which the silica (B1) has an average particle size of 0.5 to 200 nm.
[5] The rubber composition according to any one of [1] to [4], in which a conjugated diene to be a unit derived from a conjugated diene contained in the liquid conjugated diene-based polymer (C) contains at least one type selected from a group consisting of isoprene, butadiene, and farnesene.
[6] The rubber composition according to any one of [1] to [5], in which the liquid conjugated diene-based polymer (C) is at least one type selected from a group consisting of liquid polyisoprene and a liquid butadiene-farnesene copolymer.
[7] The rubber composition according to any one of [1] to [6], in which the liquid conjugated diene-based polymer (C) is liquid polyisoprene.
[8] The rubber composition according to any one of [1] to [7], further containing carbon black (B2) as the filler (B) .
[9] A crosslinked product, obtained by crosslinking the rubber composition according to any one of [1] to [8].
[10] A tire tread, formed at least partially using the rubber composition according to any one of [1] to [8].
[11] A pneumatic tire, formed at least partially using the rubber composition according to any one of [1] to [8].

Advantageous Effects of Invention

According to the present invention, a rubber composition having improved processability can be obtained even when the rubber composition contains a highly modified solution-polymerized styrene-butadiene copolymer having a specific content of Si derived from a Si-containing functional group as a solid rubber, which is expected to be improved in low fuel consumption performance, and further contains a fine filler as a filler. The rubber composition or the crosslinked product of the rubber composition has an inherent good elastic modulus. In addition, a tire (for example, a pneumatic tire) produced such that at least a portion thereof is formed from the rubber composition or the crosslinked product of the rubber composition is excellent in low heat generation.

Description of Embodiments

[Solid rubber (A)]

The solid rubber (A) used in the rubber composition of the present invention refers to a rubber that can be handled in a solid state at 20°C. The Mooney viscosity $ML_{1+4}$ of the solid rubber (A) at 100°C is usually in the range of 20 to 200.

The solid rubber (A) contains 60 mass% or more of a modified solution-polymerized styrene-butadiene copolymer (A1) having a Si-containing functional group, and the content of Si derived from the Si-containing functional group contained in the modified solution-polymerized styrene-butadiene copolymer (A1) is 220 to 800 ppm (hereinafter, the styrene-butadiene copolymer is also referred to as "SBR", and the solution-polymerized styrene-butadiene copolymer is also referred to as "S-SBR"). As the modified S-SBR (A1), for example, a modified S-SBR used in tire applications can be used. When a modified S-SBR that satisfies the above-mentioned requirements is contained as the solid rubber (A), the dispersibility of the filler (B) containing the below-mentioned silica (B1) in the rubber composition tends to be excellent as compared with a case where the modified SBR is not contained. When the silica (B1) can be sufficiently mixed in the rubber composition, a tire produced at least partially using the rubber composition or a crosslinked product of the rubber composition is expected to be excellent in low heat generation.

The modified S-SBR (A1) used in the present invention can be produced, for example, by producing an unmodified S-SBR by a solution polymerization method and introducing a Si-containing functional group into the unmodified S-SBR. The position at which the Si-containing functional group of the modified SBR is introduced may be a terminal of the polymer chain or a side chain of the polymer chain. In the case of production by the method described later, the position at which the functional group is introduced is usually a terminal of the polymer chain.

The unmodified S-SBR can be produced by a conventional solution polymerization method. Examples of the method include a method in which styrene and butadiene as monomers are polymerized in the presence of a polar compound as desired using an anionically polymerizable active metal in a solvent.

Examples of the anionically polymerizable active metal include alkali metals such as lithium, sodium, and potassium; alkaline earth metals such as beryllium, magnesium, calcium, strontium, and barium; and lanthanoid-based rare earth metals such as lanthanum and neodymium. Among them, alkali metals and alkaline earth metals are preferable, and alkali metals are more preferable. The anionically polymerizable active metal compound is preferably an organoalkali metal compound.

Examples of the solvent include aliphatic hydrocarbons such as n-butane, n-pentane, isopentane, n-hexane, n-heptane, and isooctane; cycloaliphatic hydrocarbons such as cyclopentane, cyclohexane, and methylcyclopentane; and aromatic hydrocarbons such as benzene and toluene. These solvents are preferably used in a range where the monomer concentration in the solvent is 1 to 50 mass%.

Examples of the organoalkali metal compound include organomonolithium compounds such as n-butyl lithium, sec-butyl lithium, t-butyl lithium, hexyl lithium, phenyl lithium, and stilbene lithium; polyfunctional organolithium compounds such as dilithiomethane, 1,4-dilithiobutane, 1,4-dilithio-2-ethylcyclohexane, and 1,3,5-trithiobenzene; sodium naphthalene, and potassium naphthalene. Among these organoalkali metal compounds, organolithium compounds are preferable, and organomonolithium compounds are more preferable. The amount of the organoalkali metal compound to be used is appropriately determined according to the molecular weight of the S-SBR to be produced.

The organoalkali metal compound can also be used as an organoalkali metal amide by reacting with a secondary amine such as dibutylamine, dihexylamine, or dibenzylamine.

The polar compound is not particularly limited as long as it is one that is usually used for adjusting the microstructure of a butadiene unit or the distribution of styrene in the polymer chain without deactivating the reaction in anionic polymerization. Examples of the polar compound include ether compounds such as dibutyl ether, tetrahydrofuran, and ethylene glycol diethyl ether; tertiary amines such as N,N,N',N'-tetramethylethylenediamine and trimethylamine; alkali metal alkoxides, and phosphine compounds.

The temperature of the polymerization reaction is usually in the range of -80°C to 150°C, preferably in the range of 0°C to 100°C, and more preferably in the range of 30°C to 90°C. The polymerization mode may be either batch polymerization or continuous polymerization. Further, in order to improve random copolymerizability of styrene and butadiene, it is preferable to continuously or intermittently supply styrene and butadiene into the reaction solution so that a composition ratio of styrene and butadiene in a polymerization system falls within a specific range.

The modified S-SBR (A1) can be produced by introducing a Si-containing functional group into the thus obtained unmodified S-SBR. For example, the modified S-SBR (A1) is produced by chemically bonding a modifying compound having a Si-containing functional group to the unmodified S-SBR via a carbon-Si bond.

In general, when silica is simply mixed with a solid rubber, the affinity of silica for the solid rubber is low, and therefore, even when silica is mixed with the solid rubber, it is difficult to sufficiently achieve improvement in performance (for example, improvement in reinforcement performance) expected from the characteristics of silica. Since the modified S-SBR (A1) has a Si-containing functional group, the affinity between silica and the solid rubber component can be

enhanced via this functional group, and the improvement in performance expected from the characteristics of silica is easily exhibited.

The Si-containing functional group of the modified S-SBR (A1) is preferably a Si-containing functional group having an alkoxyl group, and more preferably an alkoxysilyl group.

The modified S-SBR (A1) can be produced, for example, by adding a modifying compound having a Si-containing functional group that can react with a polymerization active terminal thereof after the polymerization reaction of the S-SBR described above is completed.

Examples of the modifying compound having a Si-containing functional group include a compound represented by the following formula (a1).

$$Si(R^1)_a(X^1)_d \qquad (a1)$$

In the above formula (a1), $R^1$'s are each independently an alkyl group having 1 to 20 carbon atoms, a cycloalkyl group having 3 to 20 carbon atoms, an aryl group having 6 to 20 carbon atoms, or an aralkyl group having 7 to 20 carbon atoms, $X^1$'s are each independently chlorine or bromine, a is an integer of 0 to 3, b is an integer of 1 to 4, and a + b = 4.

The alkyl group to be $R^1$ is preferably a methyl group, an ethyl group, a n-butyl group, a n-octyl group, or a 2-ethylhexyl group, the cycloalkyl group to be $R^1$ is preferably a cyclohexyl group, the aryl group to be $R^1$ is preferably a phenyl group, and the aralkyl group is preferably a neophil group.

The modifying compound having a Si-containing functional group is preferably at least one type selected from the group consisting of a compound represented by the following formula (a2) and a compound represented by the following formula (a3) from the viewpoint of further enhancing the affinity between the modified S-SBR (A1) and the silica (B1).

$$Si(R^2)_c(OR^3)_d \qquad (a2)$$

In the above formula (a2), $R^2$ and $R^3$ are each independently a monovalent aliphatic hydrocarbon group having 1 to 20 carbon atoms or a monovalent aromatic hydrocarbon group having 6 to 18 carbon atoms, c is an integer of 0 to 2, d is an integer of 2 to 4, and c + d = 4. When a plurality of $OR^3$'s are contained, the plurality of $OR^3$'s may be mutually identical or different, and the compound does not contain an active proton.

Specific examples of the compound represented by the above formula (a2) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, and divinyldiethoxysilane. Among these compounds, at least one type selected from the group consisting of tetraethoxysilane, methyltriethoxysilane, and dimethyldiethoxysilane is preferable.

[Chemical Formula 1]

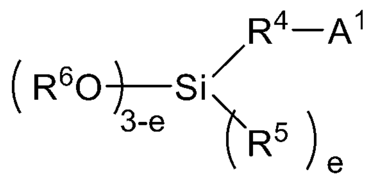

(a3)

In the above formula (a3), $A^1$ is a monovalent group having at least one type of functional group selected from the group consisting of an epoxy group, a glycidyloxy group, an isocyanate group, an imino group, a carboxylic acid ester group, a carboxylic acid anhydride group, a cyclic tertiary amino group, an acyclic tertiary amino group, a pyridine group, a silazane group, and a disulfide group, $R^4$ is a single bond or a divalent hydrocarbon group, $R^5$ and $R^6$ are each independently a monovalent aliphatic hydrocarbon group having 1 to 20 carbon atoms or a monovalent aromatic hydrocarbon group having 6 to 18 carbon atoms, e is an integer of 0 to 2, and when there are a plurality of $OR^6$'s, the plurality of $OR^6$'s may be mutually identical or different, and no active proton is contained in the compound.

Specific examples of the compound represented by the above formula (a3) include epoxy group-containing alkoxysilane compounds such as 2-glycidyloxyethyltrimethoxysilane, 2-glycidyloxyethyltriethoxysilane, (2-glycidyloxyethyl)methyldimethoxysilane, 3-glycidyloxypropyltrimethoxysilane, 3-glycidyloxypropyltriethoxysilane, (3-glycidyloxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. Among these compounds, the compound represented by (a3) is preferably at least one type selected from the group consisting of 3-glycidyloxypropyltrimethoxysilane and 2-(3,4-epoxycyclohexyl)ethyltrimethoxysilane.

In addition, as the modifying compound having a Si-containing functional group, a hydrocarbyloxysilane compound is a preferred embodiment because it has high affinity for silica.

Examples of the hydrocarbyloxysilane compound used for producing the modified S-SBR (A1) include a hydrocarbyloxysilane compound represented by the following formula (a4).

[Chemical Formula 2]

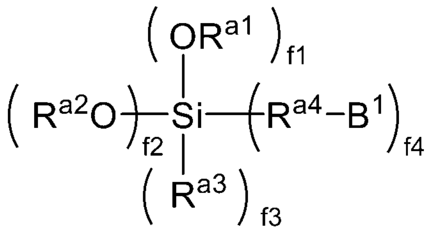

(a4)

In the above formula (a4), f1, f3, and f4 each independently represent an integer of 0 to 3, f2 represents an integer of 1 to 4, and f1 to f4 satisfy f1 + f2 + f3 + f4 = 4,

$B^1$ is at least one functional group selected from the group consisting of a saturated cyclic tertiary amine compound residue, an unsaturated cyclic tertiary amine compound residue, a ketimine residue, a nitrile group, an isocyanate group, a thioisocyanate group, an epoxy group, a thioepoxy group, an isocyanuric acid trihydrocarbyl ester group, a carbonic acid dihydrocarbyl ester group, a nitrile group, a pyridine group, a ketone group, a thioketone group, an aldehyde group, a thioaldehyde group, an amide group, a carboxylic acid ester group, a thiocarboxylic acid ester group, a metal base of a carboxylic acid ester, a metal base of a thiocarboxylic acid ester, a carboxylic acid anhydride residue, a carboxylic acid halide compound residue, a first amino group having a hydrolyzable group, a second amino group having a hydrolyzable group, and a mercapto compound residue having a hydrolyzable group, and when f4 is 2 or more, $B^1$'s may be identical or different, and two $R^{a4}$-$B^1$'s may be integrated to form a divalent group of a cyclic structure bonded to Si,

$R^{a1}$ is a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when f1 is 2 or more, $R^{a1}$'s may be identical or different,

$R^{a2}$ is a monovalent aliphatic hydrocarbon group having 1 to 20 carbon atoms, a monovalent alicyclic hydrocarbon group having 3 to 20 carbon atoms, a monovalent aromatic hydrocarbon group having 6 to 18 carbon atoms, or a group which is any one of these groups and further contains a nitrogen atom and/or a silicon atom, and when f2 is 2 or more, $R^{a2}$'s may be mutually identical or different, and two $R^{a2}$O's may be integrated to form a divalent organic group having a cyclic structure bonded to Si,

$R^{a3}$ is a monovalent aliphatic hydrocarbon group having 1 to 20 carbon atoms, a monovalent alicyclic hydrocarbon group having 3 to 20 carbon atoms, a monovalent aromatic hydrocarbon group having 6 to 18 carbon atoms, or a halogen atom (fluorine, chlorine, bromine, or iodine), and when f3 is 2 or more, $R^{a3}$'s may be identical or different,

$R^{a4}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms, and when f4 is 2 or more, $R^{a4}$'s may be identical or different.

The hydrolyzable group contained in the first amino group having a hydrolyzable group, the second amino group having a hydrolyzable group, and the mercapto compound residue having a hydrolyzable group, which can be $B^1$, is preferably at least one type selected from the group consisting of a trimethylsilyl group and a tert-butyldimethylsilyl group, and more preferably a trimethylsilyl group.

As the hydrocarbyloxysilane compound represented by the above formula (a4), a hydrocarbyloxysilane compound represented by the following formula (a5) is a preferred embodiment.

[Chemical Formula 3]

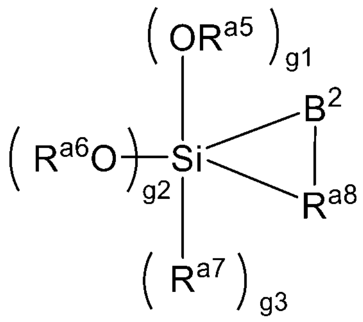

(a5)

In the above formula (a5), g1 and g3 are each independently an integer of 0 to 1, g2 is an integer of 1 to 2, and g1 to g3 satisfy g1 + g2 + g3 = 2,

$B^2$ is $NR^{aa}$ ($R^{aa}$ is a monovalent hydrocarbon group, a monovalent hydrolyzable group, or a monovalent nitrogen-containing organic group, and as the hydrolyzable group, a trimethylsilyl group or a tert-butyldimethylsilyl group is preferable, and a trimethylsilyl group is more preferable) or a sulfur atom, $R^{a5}$ is a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms,

$R^{a7}$ is a monovalent aliphatic hydrocarbon group having 1 to 20 carbon atoms, a monovalent alicyclic hydrocarbon group having 3 to 20 carbon atoms, a monovalent aromatic hydrocarbon group having 6 to 18 carbon atoms, or a halogen atom (fluorine, chlorine, bromine, or iodine),

$R^{a6}$ is a monovalent aliphatic hydrocarbon group having 1 to 20 carbon atoms, a monovalent alicyclic hydrocarbon group having 3 to 20 carbon atoms, a monovalent aromatic hydrocarbon group having 6 to 18 carbon atoms, or a group which is any of these groups and further contains a nitrogen atom and/or a silicon atom, and when g2 is 2, $R^{a6}$'s may be mutually identical or different, or two $R^{a6}O$'s may be integrated to form a divalent group having a cyclic structure bonded to Si, and

$R^{a8}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms.

As the hydrocarbyloxysilane compound represented by the above formula (a4), a hydrocarbyloxysilane compound represented by the following formula (a6) or (a7) is a preferred embodiment.

[Chemical Formula 4]

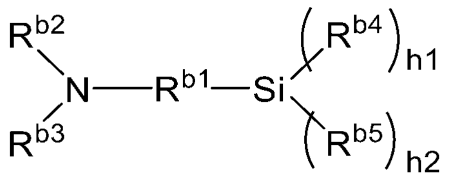

(a6)

In the above formula (a6), h1 is an integer of 0 to 2, h2 is an integer of 1 to 3, and h1 and h2 satisfy h1 + h2 = 3,

$R^{b1}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms,

$R^{b2}$ and $R^{b3}$ are each independently a hydrolyzable group, a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms,

$R^{b4}$ is a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when h1 is 2, $R^{b4}$'s may be identical or different, and

$R^{b5}$ is a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when h2 is 2 or more, $R^{b5}$'s may be identical or different.

[Chemical Formula 5]

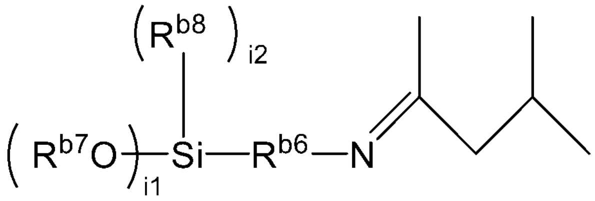

(a7)

In the above formula (a7), i1 is an integer of 1 to 3, i2 is an integer of 0 to 2, and i1 and i2 satisfy i1 + i2 = 3,

$R^{b6}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms,
$R^{b7}$ is a dimethylaminomethyl group, a

dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a
dimethylsilylaminomethyl group, a dimethylsilylaminoethyl group, a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when i1 is 2 or more, $R^{b7}$'s may be identical or different, and

$R^{b8}$ is a hydrocarbyloxy group having 1 to 20 carbon atoms, a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when i2 is 2, $R^{b8}$'s may be identical or different.

As the hydrocarbyloxysilane compound represented by the above formula (a4), a hydrocarbyloxysilane compound having two or more nitrogen atoms represented by the following formula (a8) or (a9) is a preferred embodiment.

[Chemical Formula 6]

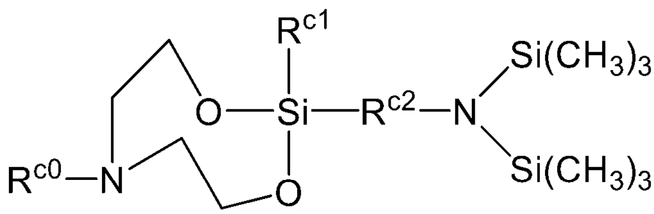

(a8)

In the above formula (a8), $R^{c0}$ is a trimethylsilyl group ($Si(CH_3)_3$), a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms,

$R^{c1}$ is a hydrocarbyloxy group having 1 to 20 carbon atoms, a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and
$R^{c2}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms.

[Chemical Formula 7]

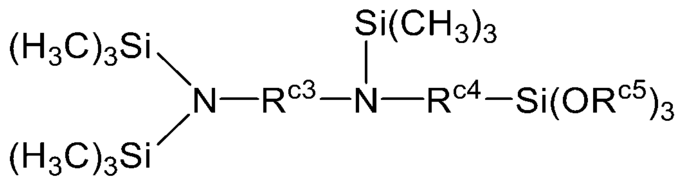

(a9)

In the above formula (a9), $R^{c3}$ and $R^{c4}$ are each independently a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms, and
$R^{c5}$ is a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and a plurality of $R^{c5}$'s may be identical or different.

As the hydrocarbyloxysilane compound represented by the above formula (a4), a hydrocarbyloxysilane compound represented by the following formula (a10) is another preferred embodiment.

[Chemical Formula 8]

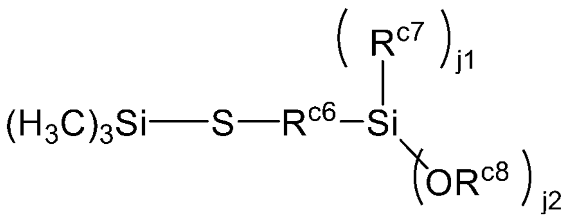

(a10)

In the above formula (a10), j1 is an integer of 0 to 2, j2 is an integer of 1 to 3, and j1 and j2 satisfy j1 + j2 = 3,

$R^{c6}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms, and
$R^{c7}$ and $R^{c8}$ are each independently a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms, and when j1 is 2, $R^{c7}$'s may be identical or different, and when j2 is an integer of 2 or more, $R^{c8}$'s may be identical or different.

As the hydrocarbyloxysilane compound represented by the above formula (a4), a hydrocarbyloxysilane compound represented by the following formula (a11) is another preferred embodiment.

[Chemical Formula 9]

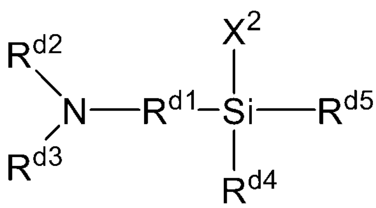

(a11)

In the above formula (a11), X2 is a halogen atom,

$R^{d1}$ is a divalent aliphatic hydrocarbon group having 1 to 20 carbon atoms, a divalent alicyclic hydrocarbon group having 3 to 20 carbon atoms, or a divalent aromatic hydrocarbon group having 6 to 18 carbon atoms,
$R^{d2}$ and $R^{d3}$ are each independently a hydrolyzable group or a monovalent aliphatic hydrocarbon group having 1 to 20 carbon atoms, a monovalent alicyclic hydrocarbon group having 3 to 20 carbon atoms, or a monovalent aromatic

hydrocarbon group having 6 to 18 carbon atoms, or $R^{d2}$ and $R^{d3}$ may be integrated to form a divalent organic group having a cyclic structure bonded to Si, and
$R^{d4}$ and $R^{d5}$ are each independently a halogen atom, a hydrocarbyloxy group, a monovalent aliphatic hydrocarbon group having 1 to 20 carbon atoms, a monovalent alicyclic hydrocarbon group having 3 to 20 carbon atoms, or a monovalent aromatic hydrocarbon group having 6 to 18 carbon atoms.

As the above $R^{d2}$ and $R^{d3}$, a hydrolyzable group is preferable, and among such hydrolyzable groups, a trimethylsilyl group or a tert-butyldimethylsilyl group is preferable, and a trimethylsilyl group is particularly preferable.

The hydrocarbyloxysilane compounds represented by the above formulae (a4) to (a11) are suitably used as modifying compounds for modifying an active terminal of anionic polymerization after the S-SBR is produced by anionic polymerization when the modified S-SBR (A1) is produced. The hydrocarbyloxysilane compounds represented by the formulae (a4) to (a11) are preferably alkoxysilane compounds.

Among these hydrocarbyloxysilane compounds, 3,4-bis(trimethylsilyloxy)-1-vinylbenzene, 3,4-bis(trimethylsilyloxy)benzaldehyde, and 3,4-bis(tert-butyldimethylsilyloxy)benzaldehyde are preferable.

When the modified S-SBR (A1) is produced, use of a lithium amide compound whose initiator terminal is a Si-containing functional group as an initiator for the SBR is also a preferred embodiment.

Examples of the lithium amide compound include lithium hexamethylene imide, lithium pyrrolidide, lithium piperidide, lithium heptamethylene imide, lithium dodecamethylene imide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiberazide, lithium ethylpropylamide, lithium ethylbutylamide, lithium ethylbenzylamide, and lithium methylphenethylamide.

Even when such a lithium amide compound is used as the initiator, for example, polymerization can be performed under similar polymerization conditions as those for the unmodified S-SBR as described above.

After the above-described modifying compound is added, a polymerization reaction terminator (for example, an alcohol such as methanol or isopropanol) is usually added to terminate the polymerization reaction.

The modified S-SBR (A1) thus obtained can be recovered, for example, by directly separating the solvent from the polymerization solution after the reaction is terminated, for example, by drying or steam stripping. Note that before the solvent is removed, the polymerization solution and an extender oil may be mixed in advance and recovered as an oil-extended rubber.

The content of Si derived from the Si-containing functional group contained in the modified S-SBR (A1) is 220 to 800 ppm. When such a modified S-SBR (A1) is contained in the solid rubber (A), it is possible to achieve excellent dispersibility of the filler (B) containing the silica (B1) described later in the rubber composition. When a rubber composition in which the filler (B) containing the silica (B1) can be sufficiently mixed can be produced, a tire (typically, a pneumatic tire) produced at least partially using the rubber composition or a crosslinked product of the rubber composition is excellent in low heat generation.

From the viewpoint of improving the dispersibility of the filler (B) containing the silica (B1) in the rubber composition and the low heat generation of a tire produced at least partially using the rubber composition or a crosslinked product of the rubber composition, the content of Si derived from the Si-containing functional group contained in the modified S-SBR (A1) is preferably 240 to 700 ppm, more preferably 250 to 600 ppm, and still more preferably 260 ppm to 500 ppm.

The content of Si derived from the Si-containing functional group contained in the modified S-SBR (A1) can be set to a desired value by appropriately adjusting, for example, the amount of the modifying compound having the Si-containing functional group used when the Si-containing functional group is introduced into the unmodified S-SBR with respect to the unmodified S-SBR, or the reaction conditions when the modifying compound is introduced. In addition, the content of Si derived from the Si-containing functional group of the modified S-SBR (A1) can be determined by ICP emission spectrometry. In the present invention, the content of Si derived from the Si-containing functional group contained in the modified S-SBR (A1) means the content of the Si-containing functional group contained in the modified S-SBR (A1) in terms of Si atom.

The styrene content (the content of a styrene unit, that is, the content of a unit derived from styrene) of the modified S-SBR (A1) is, for example, preferably 5 mass% or more, more preferably 10 mass% or more, still more preferably 15 mass% or more, and even more preferably 20 mass% or more from the viewpoint of, for example, improving the low heat generation performance and improving the grip performance (wet grip, dry grip) of a tire produced at least partially using the rubber composition or a crosslinked product of the rubber composition. From the above viewpoint, the styrene content of the modified S-SBR (A1) is preferably 70 mass% or less, more preferably 50 mass% or less, still more preferably 45 mass% or less, and even more preferably 40 mass% or less.

The content of the modified S-SBR (A1) in the solid rubber (A) is 60 mass% or more, preferably 70 mass% or more, more preferably 80 mass% or more, still more preferably 90 mass% or more, even more preferably 95 mass% or more, and may be 100 mass% from the viewpoint of, for example, improving the low heat generation performance and

improving the grip performance (wet grip, dry grip) of a tire produced at least partially using the rubber composition or a crosslinked product of the rubber composition. The content of the modified S-SBR (A1) in the solid rubber (A) is preferably 100 mass% or less, more preferably 95 mass% or less, still more preferably 90 mass% or less, and even more preferably 85 mass% or less.

The weight average molecular weight (Mw) of the modified S-SBR (A1) is preferably 100,000 to 2,500,000, more preferably 150,000 to 2,000,000, and still more preferably 200,000 to 1,800,000. When the Mw of the modified S-SBR (A1) is in the above range, the processability of the resulting rubber composition is ensured, the elastic modulus of the crosslinked product of the rubber composition is sufficiently increased, and the low heat generation performance and the grip performance (wet grip, dry grip) are improved when the rubber composition or the crosslinked product of the rubber composition is at least partially used for a tire.

In the present invention, the Mw is the weight average molecular weight in terms of polystyrene determined from measurement by gel permeation chromatography (GPC).

The glass transition temperature (Tg) of the modified S-SBR (A1) determined by a differential thermal analysis method is preferably -95 to 0°C, more preferably -80 to -5°C, still more preferably -70 to -10°C, even more preferably -60 to -15°C, particularly preferably -50 to -20°C, and most preferably -40 to -20°C. When the glass transition temperature is within the above range, an increase in the viscosity of the rubber composition can be prevented, and handling becomes easy.

The vinyl content of the modified S-SBR (A1) is preferably 0.1 to 80 mol%, more preferably 10 to 80 mol%, still more preferably 20 to 80 mol%, and even more preferably 40 to 70 mol%.

The vinyl content of the modified S-SBR (A1) in the present description means the total mol% of a unit derived from butadiene bonded through a 1,2-bond (a unit derived from butadiene bonded through a bond other than a 1,4-bond) in the total 100 mol% of a unit derived from butadiene contained in the modified S-SBR (A1). The vinyl content can be calculated in the same manner as the liquid conjugated diene-based polymer (C) described later using $^1$H-NMR.

[Rubber other than modified S-SBR (A1)]

As the solid rubber (A), a rubber other than the modified S-SBR (A1) may be contained. Examples of the rubber other than the modified S-SBR (A1) include synthetic rubbers other than the modified S-SBR (A1) and natural rubbers.

As the rubber other than the modified S-SBR (A1) that can be used for the solid rubber (A), a styrene-butadiene copolymer other than the modified S-SBR (A1), an isoprene rubber, a butadiene rubber, a butyl rubber, a halogenated butyl rubber, an ethylene propylene diene rubber, a butadiene acrylonitrile polymer rubber, a chloroprene rubber, and a natural rubber are preferable. Among them, a styrene-butadiene copolymer other than the modified S-SBR (A1), an isoprene rubber, a butadiene rubber, and a natural rubber are more preferable. One type of these may be used alone or two or more types thereof may be used in combination.

Examples of the SBR other than the modified S-SBR (A1) include unmodified S-SBR, unmodified emulsion-polymerized styrene-butadiene copolymer (hereinafter, the emulsion-polymerized styrene-butadiene copolymer is also referred to as "E-SBR"), and modified SBR other than the modified S-SBR (A1).

(Unmodified S-SBR)

Preferred examples of the unmodified S-SBR include an unmodified S-SBR as a raw material of the modified S-SBR. Preferred aspects of, for example, the styrene content, Mw, Tg, and vinyl content of the unmodified S-SBR are similar to those of the modified S-SBR (A1).

The unmodified S-SBR can be produced, for example, by performing a polymerization reaction of the unmodified S-SBR by the method described in the section of producing the modified S-SBR, and then adding a polymerization reaction terminator (for example, an alcohol such as methanol or isopropanol) to terminate the polymerization reaction. The produced unmodified S-SBR can be recovered in the same manner as the modified S-SBR (A1).

(Emulsion-polymerized styrene-butadiene rubber (E-SBR))

The E-SBR can be produced by a conventional emulsion polymerization method. For example, the E-SBR is obtained by emulsifying and dispersing predetermined amounts of styrene and butadiene monomers in a dispersion medium in the presence of an emulsifier, and performing emulsion polymerization with a radical polymerization initiator.

As the emulsifier, for example, a long-chain fatty acid salt having 10 or more carbon atoms or a rosin acid salt is used. Specific examples thereof include potassium salts or sodium salts of fatty acids such as capric acid, lauric acid, myristic acid, palmitic acid, oleic acid, and stearic acid.

Water is usually used as the dispersion medium. A water-soluble organic solvent such as methanol or ethanol may be contained as long as the stability during polymerization is not impaired.

Examples of the radical polymerization initiator include persulfates such as ammonium persulfate and potassium persulfate, organic peroxides, and hydrogen peroxide.

A chain transfer agent can also be used to adjust the molecular weight of the resulting E-SBR. Examples of the chain transfer agent include mercaptans such as t-dodecyl mercaptan and n-dodecyl mercaptan, carbon tetrachloride, thioglycolic acid, diterpene, terpinolene, γ-terpinene, and α-methylstyrene dimer.

The temperature of the emulsion polymerization can be appropriately selected depending on, for example, the type of the radical polymerization initiator to be used, and is usually 0°C to 100°C, and preferably 0°C to 60°C. The polymerization mode may be either continuous polymerization or batch polymerization. The polymerization reaction can be terminated by addition of the polymerization terminator.

Examples of the polymerization terminator include amine compounds such as isopropylhydroxylamine, diethylhydroxylamine, and hydroxylamine; quinone-based compounds such as hydroquinone and benzoquinone, and sodium nitrite.

After the polymerization reaction is terminated, an anti-aging agent may be added as necessary. After the polymerization reaction is terminated, the polymer can be recovered as a crumb by removing unreacted monomers from the resulting latex as necessary, then coagulating the polymer using a salt such as sodium chloride, calcium chloride, or potassium chloride as a coagulant while a pH of the coagulation system is adjusted to a predetermined value by adding an acid such as nitric acid or sulfuric acid as necessary, and then separating the dispersion medium. The crumb is washed with water, then dehydrated, and thereafter dried with, for example, a band dryer to obtain E-SBR. Note that at the time of coagulation, if necessary, the latex and an extender oil formed into an emulsion dispersion liquid may be mixed in advance and recovered as an oil-extended rubber. In the formulation of the rubber composition in the present description, the extender oil is not incorporated in the solid rubber (A).

The styrene content (the content of a styrene unit, that is, the content of a unit derived from styrene) of the E-SBR is, for example, preferably 5 mass% or more, more preferably 10 mass% or more, still more preferably 15 mass% or more, and even more preferably 20 mass% or more from the viewpoint of, for example, improving the low heat generation performance and improving the grip performance (wet grip, dry grip) of a tire produced at least partially using the rubber composition or a crosslinked product of the rubber composition. From the above viewpoint, the styrene content of the E-SBR is preferably 70 mass% or less, more preferably 50 mass% or less, still more preferably 45 mass% or less, and even more preferably 40 mass% or less.

The weight average molecular weight (Mw) of the E-SBR is preferably 100,000 to 2,500,000, more preferably 150,000 to 2,000,000, and still more preferably 150,000 to 1,800,000. When the Mw of the E-SBR is in the above range, the processability of the resulting rubber composition is ensured, the elastic modulus of a crosslinked product of the rubber composition is sufficiently increased, and the low heat generation performance and the grip performance (wet grip, dry grip) are improved when the rubber composition or a crosslinked product of the rubber composition is at least partially used for a tire.

The glass transition temperature (Tg) of the E-SBR determined by a differential thermal analysis method is preferably -70 to 0°C. The vinyl content of the E-SBR is preferably 5 to 40 mol%.

Examples of a commercially available product of the E-SBR include an oil-extended styrene butadiene rubber "ESBR 1723" manufactured by ENEOS Materials Corporation.

(Modified SBR (excluding modified S-SBR (A1))

Examples of the modified SBR other than the modified S-SBR (A1) include a modified SBR resulting from introduction of a functional group other than the Si-containing functional group. Examples of the functional group other than the Si-containing functional group include an amino group, a hydroxy group, an epoxy group, and a carboxyl group.

Examples of a method for producing the modified SBR include a method in which, before a polymerization terminator is added, for example, a coupling agent that can react with a polymerization active terminal, such as tin tetrachloride, tetraglycidyl-1,3-bisaminomethylcyclohexane, or 2,4-tolylene diisocyanate, or a polymerization terminal modifying agent such as 4,4'-bis(diethylamino)benzophenone or N-vinylpyrrolidone is added.

In the modified SBR other than the modified S-SBR (A1), the position of the polymer at which the functional group is introduced may be a polymerization terminal or a side chain of the polymer chain.

Preferred aspects of, for example, the styrene content, Mw, Tg, and vinyl content of the modified SBR (excluding the modified S-SBR (A1)) are similar to those of the modified S-SBR (A1).

(Isoprene rubber)

As the isoprene rubber, for example, it is possible to use a commercially available isoprene rubber polymerized using a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organoalkali metal compound in the same manner as S-SBR. The isoprene rubber polymerized with a Ziegler-type catalyst has a high cis-isomer content and is preferable. Further, an isoprene rubber having an ultrahigh cis-isomer content obtained using a lanthanoid-based rare earth metal catalyst may be used.

The vinyl content of the isoprene rubber is preferably 50 mol% or less, more preferably 40 mol% or less, and still more preferably 30 mol% or less. When the vinyl content exceeds 50 mol%, rolling resistance performance (low fuel consumption performance) tends to deteriorate. The lower limit of the vinyl content is not particularly limited. The vinyl content of the isoprene rubber in the present description means the total mol% of a unit derived from isoprene bonded through a 1,2-bond or a 3,4-bond (a unit derived from isoprene bonded through a bond other than a 1,4-bond) in the total 100 mol% of a unit derived from isoprene contained in the isoprene rubber. The vinyl content can be calculated in the same manner as the liquid conjugated diene-based polymer (C) described later using $^1$H-NMR.

Further, the glass transition temperature varies depending on the vinyl content, but is preferably -20°C or lower, and more preferably -30°C or lower.

The weight average molecular weight (Mw) of the isoprene rubber is preferably 90,000 to 2,000,000, and more preferably 150,000 to 1,500,000. When the weight average molecular weight of the isoprene rubber is within the above range, the processability and the mechanical strength of the rubber composition are improved.

A part of the isoprene rubber may have a branched structure or a polar functional group formed using a polyfunctional modifying agent, for example, a modifying agent such as tin tetrachloride, silicon tetrachloride, an alkoxysilane having an epoxy group in the molecule, or an amino group-containing alkoxysilane.

(Butadiene rubber)

As the butadiene rubber, for example, it is possible to use a commercially available butadiene rubber polymerized using a Ziegler-type catalyst such as a titanium tetrahalide-trialkylaluminum-based catalyst, a diethylaluminum chloride-cobalt-based catalyst, a trialkylaluminum-boron trifluoride-nickel-based catalyst, or a diethylaluminum chloride-nickel-based catalyst; a lanthanoid-based rare earth metal catalyst such as a triethylaluminum-organic acid neodymium-Lewis acid-based catalyst; or an organoalkali metal compound in the same manner as the S-SBR. The butadiene rubber polymerized with a Ziegler-type catalyst has a high cis-isomer content and is preferable. Further, a butadiene rubber having an ultrahigh cis-isomer content (for example, a cis-isomer content of 95% or more) obtained using a lanthanoid-based rare earth metal catalyst may be used.

The vinyl content of the butadiene rubber is preferably 50 mol% or less, more preferably 40 mol% or less, and still more preferably 30 mol% or less. When the vinyl content exceeds 50 mol%, rolling resistance performance (low fuel consumption performance) tends to deteriorate. The lower limit of the vinyl content is not particularly limited. The vinyl content of the butadiene rubber can be calculated in the same manner as the vinyl content of the modified S-SBR (A1) described above. Further, the glass transition temperature of the butadiene rubber varies depending on the vinyl content, but is preferably -40°C or lower, and more preferably -50°C or lower.

The weight average molecular weight (Mw) of the butadiene rubber is preferably 90,000 to 2,000,000, and more preferably 150,000 to 1,500,000. When the weight average molecular weight (Mw) of the butadiene rubber is within the above range, the processability of the resulting rubber composition is improved, and when the rubber composition or a crosslinked product of the rubber composition is at least partially used for a tire, the abrasion performance of the tire is also improved.

A part of the butadiene rubber may have a branched structure or a polar functional group formed using a polyfunctional modifying agent, for example, a modifying agent such as tin tetrachloride, silicon tetrachloride, an alkoxysilane having an epoxy group in the molecule, or an amino group-containing alkoxysilane.

One type or two or more types of, for example, a butyl rubber, a halogenated butyl rubber, an ethylene propylene diene rubber, a butadiene acrylonitrile polymer rubber, and a chloroprene rubber can be used together with SBR. A production method therefor is not particularly limited, and a commercially available product can be used.

(Natural rubber)

Examples of the natural rubber include natural rubbers generally used in, for example, tire applications such as TSRs (Technically Specified Rubbers) such as SMR (TSR from Malaysia), SIR (TSR from Indonesia), and STR (TSR from Thailand), and RSSs (Ribbed Smoked Sheets), and modified natural rubbers such as a high purity natural rubber, an epoxidized natural rubber, a hydroxylated natural rubber, a hydrogenated natural rubber, and a grafted natural rubber. Among them, SMR 20, STR 20, and RSS #3 are preferable as the natural rubber from the viewpoint of little variation in quality and easy availability. One type of these may be used alone or two or more types thereof may be used in combination.

In the present invention, the content of the solid rubber (A) in the rubber composition is preferably 25 mass% or

more, more preferably 30 mass% or more, still more preferably 35 mass% or more, and even more preferably 40 mass% or more. The content of the solid rubber (A) in the rubber composition is preferably 80 mass% or less, more preferably 75 mass% or less, still more preferably 70 mass% or less, even more preferably 65 mass% or less, and particularly preferably 60 mass% or less. When the content of the solid rubber (A) in the rubber composition is within the above range, the abrasion resistance of a tire formed at least partially using the rubber composition or a crosslinked product of the rubber composition is improved.

[Filler (B)]

The filler (B) used in the rubber composition of the present invention contains silica (B1).

The specific surface area (CTAB) of the silica (B1) is 180 to 500 $m^2/g$. When the silica (B1) having such a specific surface area is contained in the rubber composition, the elastic modulus of a crosslinked product obtained from the rubber composition can be increased. From the viewpoint of further increasing the elastic modulus of the crosslinked product obtained from the rubber composition, the specific surface area (CTAB) of the silica (B1) is preferably 180 to 450 $m^2/g$, more preferably 180 to 400 $m^2/g$, still more preferably 180 to 350 $m^2/g$, and even more preferably 180 to 300 $m^2/g$. The specific surface area (CTAB) of the filler is determined according to JIS K 6217-3:2001, and is a specific surface area ($m^2/g$) determined by adsorbing CTAB (Cetyl Trimethyl Ammonium Bromide) on the filler.

In the present invention, when the average content of Si derived from the Si-containing functional group in the solid rubber (A) (typically derived from the Si-containing functional group contained in the modified solution-polymerized styrene-butadiene copolymer (A1)) is denoted by X ppm, and the total specific surface area of the silica (B1) per 1 $cm^3$ of the rubber composition is denoted by Y $m^2/cm^3$, the value of $X \times Y$ (that is, a value obtained by multiplying X and Y) preferably satisfies 9,000 or more, more preferably 12,000 or more, still more preferably 15,000 or more, even more preferably 17,000 or more, and even more preferably 19,000 or more. When such a rubber composition is formed, a crosslinked product of the rubber composition has a higher elastic modulus, and a tire produced such that at least a portion thereof is formed from the rubber composition or the crosslinked product of the rubber composition is more excellent in low fuel consumption performance. The value of $X \times Y$ is preferably 50,000 or less, more preferably 40,000 or less, still more preferably 24,000 or less, and preferably 20,000 or less.

In the present invention, the average content X of Si derived from the Si-containing functional group in the solid rubber (A) means the average content of the Si-containing functional group contained in the solid rubber (A) in terms of Si atom. The content of Si derived from the Si-containing functional group in the solid rubber (A) is obtained by analyzing the solid rubber (A) by ICP emission spectrometry.

When the solid rubber having the Si-containing functional group in the solid rubber (A) contains only the modified S-SBR (A1), the average content of Si derived from the Si-containing functional group in the solid rubber (A) is determined by determining the content of Si derived from the Si-containing functional group contained in the modified S-SBR (A1), and using the following formula (1) from the content and the proportion of the modified S-SBR (A1) contained in the solid rubber (A).

(Average content X (ppm) of Si derived from Si-containing functional group in solid rubber (A)) = (content (ppm) of Si derived from Si-containing functional group contained in modified S-SBR (A1)) × (proportion (mass%) of modified S-SBR (A1) in solid rubber (A)) (1)

The value of Y $m^2/cm^3$, which is the total specific surface area of the silica (B1) per 1 $cm^3$ of the rubber composition, is determined from the following formula (2). In this formula, the volume of the rubber composition is denoted by H $cm^3$, the specific surface area (CTAB) of silica contained in the rubber composition having the volume of H $cm^3$ is denoted by I $m^2/g$, and the weight of the silica is denoted by J g. The volume of the rubber composition is calculated from the blending amount and specific gravity of each component contained in the rubber composition. The specific gravity of the liquid conjugated diene-based polymer (C) can be measured by the method described in JIS K 2249-2:2011.

$$Y = (I \times J)/H \quad (2)$$

The average particle size of the silica (B1) is preferably 0.5 to 200 nm, more preferably 1 to 100 nm, still more preferably 1 to 50 nm, and even more preferably 3 to 30 nm from the viewpoint of improving the rolling resistance performance, mechanical strength, and abrasion resistance of a crosslinked product and a tire produced from the rubber composition. The average particle size of silica can be determined by measuring the diameters of the particles with a transmission electron microscope and calculating the average value thereof. More specifically, it can be determined by measuring diameters of primary particles of each silica in a visual field observed with a transmission electron microscope and calculating the average value thereof.

Examples of the silica (B1) include wet silica (hydrous silicic acid), dry silica (anhydrous silicic acid), calcium silicate, and aluminum silicate. Among these silicas, wet silica is preferable from the viewpoint of further improving the mechanical strength and abrasion resistance.
As the silica (B1), one type may be used alone or two or more types may be used in combination.
In the rubber composition of the present invention, the content of the silica (B1) with respect to 100 parts by mass of the solid rubber (A) is 60 to 150 parts by mass, preferably 65 to 140 parts by mass, and more preferably 70 to 130 parts by mass. When the content of the silica (B1) is within the above range, the processability, rolling resistance performance, mechanical strength, and abrasion resistance are improved.
The further incorporation of carbon black (B2) as the filler (B) used in the rubber composition of the present invention is a preferred embodiment.
The average particle size of the carbon black (B2) is preferably 5 to 100 nm, more preferably 5 to 80 nm, and still more preferably 5 to 70 nm from the viewpoint of improving, for example, the dispersibility, mechanical strength, and hardness. The average particle size of carbon black can be determined by measuring the diameters of particles with a transmission electron microscope and calculating the average value thereof.
Examples of the carbon black (B2) include furnace black, channel black, thermal black, acetylene black, and Ketjen black. From the viewpoint of improving the crosslinking rate and mechanical strength, furnace black is preferable among these carbon blacks.
Examples of a commercially available product of the furnace black include "DIABLACK" manufactured by Mitsubishi Chemical Corporation, and "SEAST" manufactured by Tokai Carbon Co., Ltd. Examples of a commercially available product of the acetylene black include "DENKA BLACK" manufactured by Denki Kagaku Kogyo Co., Ltd. Examples of a commercially available product of the Ketjen black include "ECP-600JD" manufactured by Lion Corporation.
From the viewpoint of improving, for example, the wettability and dispersibility in the solid rubber (A), the carbon black (B2) may be subjected to an acid treatment with, for example, nitric acid, sulfuric acid, hydrochloric acid, or a mixed acid thereof, or a surface oxidation treatment by a heat treatment in the presence of air. From the viewpoint of improving the mechanical strength of the rubber composition of the present invention or a crosslinked product obtained from the rubber composition, a heat treatment may be performed at 2,000 to 3,000°C in the presence of a graphitization catalyst. As the graphitization catalyst, boron, a boron oxide (for example, $B_2O_2$, $B_2O_3$, $B_4O_3$, or $B_4O_5$), a boron oxoacid (for example, orthoboric acid, metaboric acid, or tetraboric acid) a salt thereof, a boron carbide (for example, $B_4C$ or $B_6C$), boron nitride (BN), or another boron compound is suitably used.
The carbon black (B2) can also be used after the particle size is adjusted by, for example, pulverization. In the pulverization of the carbon black, for example, a highspeed rotary pulverizer (a hammer mill, a pin mill, or a cage mill), various ball mills (a rolling mill, a vibration mill, or a planetary mill), a stirring mill (a bead mill, an attritor, a flow tube type mill, or an annular mill) can be used.
As the carbon black (B2), one type may be used alone or two or more types may be used in combination.
In the rubber composition of the present invention, the content of the carbon black (B2) with respect to 100 parts by mass of the solid rubber (A) is preferably 0.5 to 100 parts by mass, more preferably 1 to 60 parts by mass, and still more preferably 3 to 30 parts by mass. When the content of the carbon black (B2) is within the above range, for example, the processability and weather resistance of the resulting rubber composition are improved.
The rubber composition of the present invention may contain a filler other than the silica (B1) and the carbon black (B2) as the filler (B). Examples of the filler other than the silica (B1) and the carbon black (B2) include inorganic fillers such as clay, mica, calcium carbonate, magnesium hydroxide, aluminum hydroxide, barium sulfate, titanium oxide, glass fibers, a fibrous filler, and glass balloons; and organic fillers such as resin particles, wood powder, and cork powder. When such a filler is contained in the rubber composition, physical properties such as mechanical strength, heat resistance, or weather resistance can be improved, the hardness can be adjusted, and the amount of the rubber can be increased.
When a filler other than the silica (B1) and the carbon black (B2) is used as the filler (B), the content thereof is usually 120 parts by mass or less, preferably 0.5 to 100 parts by mass, more preferably 1 to 50 parts by mass, and still more preferably 1 to 20 parts by mass with respect to 100 parts by mass of the solid rubber (A).
As the filler other than the silica (B1) and the carbon black (B2), one type may be used alone or two or more types may be used in combination.

[Liquid conjugated diene-based polymer (C)]

The liquid conjugated diene-based polymer (C) used in the rubber composition of the present invention is a polymer having a relatively low molecular weight and containing a monomer unit derived from a conjugated diene (hereinafter also referred to as "conjugated diene unit"), and has a weight average molecular weight (Mw) in the range of 3,000 to 200,000. When such a liquid conjugated diene-based polymer (C) is used together with the solid rubber (A) and the filler (B), the resulting rubber composition or a crosslinked product of the rubber composition has an inherent good

elastic modulus, and a tire produced such that at least a portion thereof is formed from the rubber composition or a crosslinked product of the rubber composition is excellent in low heat generation. Furthermore, the rubber composition has excellent processability.

The liquid conjugated diene-based polymer (C) contains a unit derived from a conjugated diene (conjugated diene unit) as a monomer unit constituting the polymer. Examples of the conjugated diene include butadiene, isoprene; and a conjugated diene (c1) other than butadiene and isoprene such as 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, and chloroprene. The conjugated diene to be the conjugated diene unit contained in the liquid conjugated diene-based polymer (C) is preferably at least one type selected from the group consisting of butadiene, isoprene, and farnesene, and more preferably isoprene.

The liquid conjugated diene-based polymer (C) containing 50 mass% or more of the conjugated diene unit with respect to units derived from all monomers constituting the polymer (C) (hereinafter also referred to as "all monomer units"), that is, with respect to 100 mass% of the liquid conjugated diene-based polymer (C) is a preferred embodiment. The content of the conjugated diene unit in the liquid conjugated diene-based polymer (C) is preferably 60 to 100 mass%, and more preferably 70 to 100 mass% with respect to all monomer units. Further, the liquid conjugated diene-based polymer (C) containing 100 mass% of the conjugated diene unit (the liquid conjugated diene-based polymer (C) containing only the conjugated diene unit) is also a preferred embodiment.

Examples of a monomer unit other than the conjugated diene unit that can be contained in the liquid conjugated diene-based polymer (C) include an aromatic vinyl compound (c2) unit (a unit derived from an aromatic vinyl compound (c2)).

Examples of the aromatic vinyl compound (c2) include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. Among these aromatic vinyl compounds, styrene, α-methylstyrene, and 4-methylstyrene are preferable.

The content of the monomer unit other than the conjugated diene unit in the liquid conjugated diene-based polymer (C) is preferably 50 mass% or less, more preferably 40 mass% or less, and still more preferably 30 mass% or less with respect to 100 mass% (all monomer units) of the liquid conjugated diene-based polymer (C). For example, when the aromatic vinyl compound (c2) unit is within the above range, the processability of the rubber composition tends to be improved.

When the liquid conjugated diene-based polymer (C) contains two or more types of conjugated diene units, the bonding mode of these conjugated diene units is not particularly limited, and the liquid conjugated diene-based polymer (C) may be a random copolymer or a block copolymer.

Among the liquid conjugated diene-based polymers (C), from the viewpoint of processability of the rubber composition, at least one type selected from the group consisting of liquid polybutadiene (a liquid butadiene homopolymer), liquid polyisoprene (a liquid isoprene homopolymer), liquid polyfarnesene (a liquid farnesene homopolymer), and a liquid butadiene-farnesene copolymer is preferable, at least one type selected from the group consisting of liquid polyisoprene (a liquid isoprene homopolymer), liquid polyfarnesene (a liquid farnesene homopolymer), and a liquid butadiene-farnesene copolymer is more preferable, at least one type selected from the group consisting of liquid polyisoprene and a liquid butadiene-farnesene copolymer is still more preferable, and liquid polyisoprene is even more preferable.

The liquid conjugated diene-based polymer (C) being at least one type selected from the group consisting of liquid polybutadiene (a liquid butadiene homopolymer), liquid polyisoprene (a liquid isoprene homopolymer), and liquid polyfarnesene (a liquid farnesene homopolymer) is also a preferred embodiment.

As the liquid conjugated diene-based polymer (C), a polymer obtained by polymerizing a conjugated diene and a monomer other than the conjugated diene contained as necessary by, for example, an emulsion polymerization method or a solution polymerization method is preferable.

As the emulsion polymerization method, a known method or a method according to the known method can be used. For example, a monomer containing a predetermined amount of the conjugated diene is emulsified and dispersed in the presence of an emulsifier, and emulsion-polymerized by a radical polymerization initiator.

Examples of the emulsifier include a long-chain fatty acid salt having 10 or more carbon atoms and a rosin acid salt. Examples of the long-chain fatty acid salt include potassium salts or sodium salts of fatty acids such as capric acid, lauric acid, myristic acid, palmitic acid, oleic acid, and stearic acid.

As a dispersion medium, water is usually used, and a water-soluble organic solvent such as methanol and ethanol may be contained to the extent that stability during polymerization is not inhibited.

Examples of the radical polymerization initiator include persulfates such as ammonium persulfate and potassium persulfate, organic peroxides, and hydrogen peroxide.

In order to adjust the molecular weight of the liquid conjugated diene-based polymer (C) to be obtained, a chain transfer agent may be used. Examples of the chain transfer agent include mercaptans such as t-dodecyl mercaptan and n-dodecyl mercaptan, carbon tetrachloride, thioglycolic acid, diterpene, terpinolene, $\gamma$-terpinene, and an $\alpha$-methylstyrene dimer.

The temperature of the emulsion polymerization can be appropriately set according to the type of the radical polymerization initiator to be used. Specifically, it is usually in the range of 0 to 100°C, and preferably in the range of 0 to 60°C. The polymerization mode may be either continuous polymerization or batch polymerization.

The polymerization reaction can be terminated by addition of the polymerization terminator. Examples of the polymerization terminator include amine compounds such as isopropylhydroxylamine, diethylhydroxylamine, and hydroxylamine, quinone-based compounds such as hydroquinone and benzoquinone, and sodium nitrite.

After the polymerization reaction is terminated, an anti-aging agent may be added as necessary. After the polymerization reaction is terminated, unreacted monomers are removed from the resulting latex as necessary, then the liquid conjugated diene-based polymer (C) is coagulated using a salt such as sodium chloride, calcium chloride, or potassium chloride as a coagulant while the pH of a coagulation system is adjusted to a predetermined value by adding an acid such as nitric acid or sulfuric acid as necessary, and then the dispersion medium is separated to recover the polymer. Subsequently, the liquid conjugated diene-based polymer (C) is obtained by washing with water, dehydration, and then drying. Note that at the time of coagulation, if necessary, the latex and an extender oil formed into an emulsion dispersion liquid may be mixed in advance and recovered as an oil-extended liquid conjugated diene-based polymer (C).

As the solution polymerization method, a known method or a method conforming to the known method can be used. For example, a monomer containing a conjugated diene is polymerized in a solvent using a Ziegler-based catalyst, a metallocene-based catalyst, an anionically polymerizable active metal, or an active metal compound optionally in the presence of a polar compound.

Examples of the solvent include aliphatic hydrocarbons such as n-butane, n-pentane, isopentane, n-hexane, n-heptane, and isooctane; cycloaliphatic hydrocarbons such as cyclopentane, cyclohexane, and methylcyclopentane; and aromatic hydrocarbons such as benzene, toluene, and xylene.

Examples of the anionically polymerizable active metal include alkali metals such as lithium, sodium, and potassium; alkaline earth metals such as beryllium, magnesium, calcium, strontium, and barium; and lanthanoid-based rare earth metals such as lanthanum and neodymium. Among the anionically polymerizable active metals, alkali metals and alkaline earth metals are preferable, and alkali metals are more preferable.

The anionically polymerizable active metal compound is preferably an organoalkali metal compound. Examples of the organoalkali metal compound include organomonolithium compounds such as methyl lithium, ethyl lithium, n-butyl lithium, sec-butyl lithium, t-butyl lithium, hexyl lithium, phenyl lithium, and stilbene lithium; polyfunctional organolithium compounds such as dilithiomethane, dilithionaphthalene, 1,4-dithiobutane, 1,4-dilithio-2-ethylcyclohexane, and 1,3,5-trithiobenzene; sodium naphthalene, and potassium naphthalene. Among these organoalkali metal compounds, organolithium compounds are preferable, and organomonolithium compounds are more preferable.

The amount of the organoalkali metal compound to be used can be appropriately set according to, for example, the melt viscosity and the molecular weight of the liquid conjugated diene-based polymer (C), but the organoalkali metal compound is usually used in an amount of 0.01 to 3 parts by mass with respect to 100 parts by mass of all monomers containing a conjugated diene used for producing the liquid conjugated diene polymer (C).

The organoalkali metal compound can also be used as an organoalkali metal amide by reacting with a secondary amine such as dibutylamine, dihexylamine, or dibenzylamine.

The polar compound is usually used for adjusting the microstructure (for example, vinyl content) of the conjugated diene unit without deactivating the reaction in the anionic polymerization. Examples of the polar compound include ether compounds such as dibutyl ether, tetrahydrofuran, and ethylene glycol diethyl ether; tertiary amines such as N,N,N',N'-tetramethylethylenediamine and trimethylamine; alkali metal alkoxides, and phosphine compounds. The polar compound is usually used in an amount of 0.01 to 1,000 mol with respect to 1 mol of the organoalkali metal compound.

The temperature of the solution polymerization is usually in the range of -80°C to 150°C, preferably in the range of 0°C to 100°C, and more preferably in the range of 10°C to 90°C. The polymerization mode may be either a batch type or a continuous type.

The polymerization reaction can be terminated by addition of the polymerization terminator. Examples of the polymerization terminator include alcohols such as methanol and isopropanol. The resulting polymerization reaction solution is poured into a poor solvent such as methanol to precipitate the liquid conjugated diene-based polymer (C), or the polymerization reaction solution is washed with water, separated, and then dried, so that the liquid conjugated diene-based polymer (C) can be isolated.

As a method for producing the unmodified liquid conjugated diene-based polymer (C), the solution polymerization method is preferable among the above methods.

The liquid conjugated diene-based polymer (C) thus obtained may be modified with, for example, a modifying compound after polymerization, or may be one which has been hydrogenated so that at least some of the conjugated diene

units are hydrogenated. In consideration of, for example, improvement in the processability of the rubber composition, the liquid conjugated diene-based polymer (C) being an unmodified liquid conjugated diene-based polymer that has not been modified after polymerization is a preferred embodiment. In consideration of, for example, the processability of the rubber composition and the handleability of the liquid conjugated diene-based polymer (C), the liquid conjugated diene-based polymer (C) being an unhydrogenated liquid conjugated diene-based polymer that has not been hydrogenated is a preferred embodiment.

The weight average molecular weight (Mw) of the liquid conjugated diene-based polymer (C) is in the range of 3,000 to 200,000, preferably in the range of 7,000 to 160,000, more preferably in the range of 20,000 to 100,000, and still more preferably in the range of 30,000 to 60,000. Alternatively, the weight average molecular weight (Mw) of the liquid conjugated diene-based polymer (C) is preferably in the range of 10,000 to 140,000, more preferably in the range of 20,000 to 120,000, still more preferably in the range of 30,000 to 120,000, even more preferably in the range of 40,000 to 120,000, particularly preferably in the range of 40,000 to 100,000, and more particularly preferably in the range of 40,000 to 60,000. In the present invention, the Mw of the liquid conjugated diene-based polymer (C) is the weight average molecular weight in terms of polystyrene determined from measurement by the gel permeation chromatography (GPC). When the Mw of the liquid conjugated diene-based polymer (C) is within the above range, the processability of the rubber composition can be improved, the rubber composition or a crosslinked product of the rubber composition has an inherent good elastic modulus, and a tire produced such that at least a portion thereof is formed from the rubber composition or a crosslinked product of the rubber composition is excellent in low heat generation. In the present invention, two or more types of liquid conjugated diene-based polymers (C) having different Mws may be used in combination.

The molecular weight distribution (Mw/Mn) of the liquid conjugated diene-based polymer (C) is preferably 1.0 to 20.0, more preferably 1.0 to 10.0, still more preferably 1.0 to 5.0, even still more preferably 1.0 to 2.0, and particularly preferably 1.0 to 1.5. The Mw/Mn within the above range is more preferable because the variation in the viscosity of the resulting liquid conjugated diene-based polymer (C) is small. The molecular weight distribution (Mw/Mn) means a ratio of a weight average molecular weight (Mw)/a number average molecular weight (Mn) in terms of standard polystyrene determined by the measurement by GPC.

The melt viscosity of the liquid conjugated diene-based polymer (C) measured at 38°C is preferably 0.1 to 2,000 Pa·s, more preferably 1 to 1,500 Pa·s, still more preferably 5 to 1,000 Pa·s, even more preferably 10 to 700 Pa·s, particularly preferably 50 to 700 Pa·s, more particularly preferably 150 to 700 Pa·s, and still more particularly preferably 300 to 700 Pa·s.

When the melt viscosity of the liquid conjugated diene-based polymer (C) is within the above range, the flexibility of the resulting rubber composition is improved, so that the processability is improved. In the present invention, the melt viscosity of the liquid conjugated diene-based polymer (C) is a value measured by a Brookfield-type viscometer at 38°C.

The vinyl content of the liquid conjugated diene-based polymer (C) is preferably 1 to 70 mol%, more preferably 1 to 50 mol%, still more preferably 1 to 30 mol%, and even more preferably 1 to 20 mol%.

In the present invention, the "vinyl content" means the total mol% of conjugated diene units bonded through a 1,2-bond or a 3,4-bond (a case other than farnesene), and a 3,13-bond (a case of farnesene) (conjugated diene units bonded through a bond other than a 1,4-bond (a case other than farnesene) and a 1,13-bond (a case of farnesene)) in the total 100 mol% of the conjugated diene (c1) unit contained in the liquid conjugated diene-based polymer (C). The vinyl content can be calculated, using $^1$H-NMR, from an area ratio of peaks derived from conjugated diene units bonded through a 1,2-bond or a 3,4-bond (a case other than farnesene), and a 3,13-bond (a case of farnesene) to peaks derived from conjugated diene units bonded through a 1,4-bond (a case other than farnesene) and a 1,13-bond (a case of farnesene).

When the vinyl content is within the above range, for example, a tire produced such that at least a portion thereof is formed from the rubber composition or a crosslinked product of the rubber composition has good rolling resistance performance, and the processability of the rubber composition is improved.

The vinyl content of the liquid conjugated diene-based polymer (C) can be set to a desired value by controlling, for example, the type of the solvent used in the production of the liquid conjugated diene-based polymer (C), the polar compound to be used as necessary, or the polymerization temperature.

The glass transition temperature (Tg) of the liquid conjugated diene-based polymer (C) may vary depending on, for example, the vinyl content of the conjugated diene unit, the type of the conjugated diene unit, and the content of a unit derived from a monomer other than the conjugated diene, but is preferably -150 to 50°C, more preferably -120 to 0°C, still more preferably -100 to -20°C, even more preferably -90 to -40°C, and even more preferably -80 to -40°C. When the Tg is within the above range, for example, the rolling resistance performance of a tire produced such that at least a portion thereof is formed from the rubber composition or a crosslinked product of the rubber composition is improved. Further, an increase in viscosity can be prevented, and handling is facilitated.

As the liquid conjugated diene-based polymer (C), one type may be used alone or two or more types may be used in combination.

In the liquid conjugated diene-based polymer (C), the amount of a catalyst residue derived from the polymerization catalyst used for production thereof is preferably in the range of 0 to 200 ppm in terms of metal. For example, when an

organoalkali metal such as an organolithium compound is used as a polymerization catalyst for producing the liquid conjugated diene-based polymer (C), a metal serving as a reference of the amount of the catalyst residue is an alkali metal such as lithium. When the amount of the catalyst residue is within the above range, the tack does not decrease during, for example, processing, and the heat resistance of a crosslinked product obtained from the rubber composition of the present invention and the characteristics of the tire are improved. The amount of the catalyst residue derived from the polymerization catalyst used for producing the liquid conjugated diene-based polymer (C) is more preferably 0 to 150 ppm, still more preferably 0 to 100 ppm, even more preferably 0 to 50 ppm, and particularly preferably 0 to 20 ppm in terms of metal. The amount of the catalyst residue can be measured using, for example, a polarized Zeeman atomic absorption spectrophotometer.

Examples of the method of setting the amount of the catalyst residue for the liquid conjugated diene-based polymer (C) to such a specific amount include a method of purifying the liquid conjugated diene-based polymer (C) and sufficiently removing the catalyst residue. As the purification method, washing with water or warm water, or an organic solvent represented by, for example, methanol or acetone, or supercritical fluid carbon dioxide is preferable. The number of times of washing is preferably 1 to 20 times and more preferably 1 to 10 times from an economical viewpoint. The washing temperature is preferably 20 to 100°C, and more preferably 40 to 90°C. In addition, also when polymerization is performed after impurities that inhibit polymerization are removed by distillation or with an adsorbent before the polymerization reaction to increase the purity of the monomer, the amount of the polymerization catalyst required is small, and thus the amount of the catalyst residue can be reduced.

From a viewpoint similar to the above, the amount of the catalyst residue in the rubber composition of the present invention is preferably 0 to 200 ppm, more preferably 0 to 150 ppm, and still more preferably 0 to 100 ppm in terms of metal. The amount of the catalyst residue in this case may be the amount of the catalyst residue derived from the polymerization catalyst used for producing a component other than the liquid conjugated diene-based polymer (C) in the rubber composition (for example, the solid rubber (A)).

In the rubber composition of the present invention, the content of the liquid conjugated diene-based polymer (C) with respect to 100 parts by mass of the solid rubber (A) is 5 to 30 parts by mass, preferably 5 to 25 parts by mass, more preferably 5 to 20 parts by mass, and still more preferably 5 to 15 parts by mass. When the content of the liquid conjugated diene-based polymer (C) in the rubber composition is within the above range, the processability of the rubber composition can be improved, the good elastic modulus of the rubber composition or a crosslinked product of the rubber composition is not impaired, and the low heat generation is not impaired in a tire produced such that at least a portion thereof is formed from the rubber composition or a crosslinked product of the rubber composition.

[Other components]

The rubber composition of the present invention may further contain a crosslinking agent (D) in order to crosslink the rubber. Examples of the crosslinking agent (D) include sulfur, a sulfur compound, oxygen, an organic peroxide, a phenol resin, an amino resin, quinone and quinone dioxime derivatives, a halogen compound, an aldehyde compound, an alcohol compound, an epoxy compound, a metal halide and an organometallic halide, and a silane compound. Examples of the sulfur compound include morpholine disulfide and alkylphenol disulfide. Examples of the organic peroxide include cyclohexanone peroxide, methyl acetoacetate peroxide, t-butyl peroxyisobutyrate, t-butyl peroxybenzoate, benzoyl peroxide, lauroyl peroxide, dicumyl peroxide, di-t-butyl peroxide, and 1,3-bis(t-butylperoxyisopropyl)benzene. One type of these crosslinking agents (D) may be used alone or two or more types thereof may be used in combination. From the viewpoint of mechanical properties of the crosslinked product, the crosslinking agent (D) is usually contained in an amount of 0.1 to 10 parts by mass, preferably 0.5 to 10 parts by mass, and more preferably 0.8 to 5 parts by mass with respect to 100 parts by mass of the solid rubber (A).

The rubber composition of the present invention may further contain a vulcanization accelerator (E) when, for example, sulfur or a sulfur compound is contained as the crosslinking agent (D) for crosslinking (vulcanizing) the rubber. Examples of the vulcanization accelerator (E) include a guanidine-based compound, a sulfenamide-based compound, a thiazole-based compound, a thiuram-based compound, a thiourea-based compound, a dithiocarbamic acid-based compound, an aldehyde-amine-based compound, an aldehyde-ammonia-based compound, an imidazoline-based compound, and a xanthate-based compound. One type of these vulcanization accelerators (E) may be used alone or two or more types thereof may be used in combination. The vulcanization accelerator (E) is usually contained in an amount of 0.1 to 15 parts by mass, and preferably 0.1 to 10 parts by mass with respect to 100 parts by mass of the solid rubber (A).

The rubber composition of the present invention may further contain a vulcanization aid (F) when, for example, sulfur or a sulfur compound is contained as the crosslinking agent (D) for crosslinking (vulcanizing) the rubber. Examples of the vulcanization aid (F) include fatty acids such as stearic acid, metal oxides such as zinc flower, and fatty acid metal salts such as zinc stearate. One type of these vulcanization aids (F) may be used alone or two or more types thereof may be used in combination. The vulcanization aid (F) is usually contained in an amount of 0.1 to 15 parts by mass, and preferably 1 to 10 parts by mass with respect to 100 parts by mass of the solid rubber (A).

In the rubber composition of the present invention, incorporation of a silane coupling agent is a preferred embodiment. Examples of the silane coupling agent include a sulfide-based compound, a mercapto-based compound, a vinyl-based compound, an amino-based compound, a glycidoxy-based compound, a nitro-based compound, and a chloro-based compound.

Examples of the sulfide-based compound include bis(3-triethoxysilylpropyl)tetrasulfide, bis(2-triethoxysilylethyl) tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, and 3-octanoylthio-1-propyltriethoxysilane.

Examples of the mercapto-based compound include 3-mercaptopropyltrimethoxysilane, 3-mercaptopropyltriethoxysilane, 2-mercaptoethyltrimethoxysilane, and 2-mercaptoethyltriethoxysilane.

Examples of the vinyl-based compound include vinyltriethoxysilane and vinyltrimethoxysilane.

Examples of the amino-based compound include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of the glycidoxy-based compound include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of the nitro-based compound include 3-nitropropyltrimethoxysilane and 3-nitropropyltriethoxysilane.

Examples of the chloro-based compound include 3-chloropropyltrimethoxysilane, 3-chloropropyltriethoxysilane, 2-chloroethyltrimethoxysilane, and 2-chloroethyltriethoxysilane.

Examples of other compounds include octyltriethoxysilane, methyltriethoxysilane, methyltrimethoxysilane, and hexadecyltrimethoxysilane.

One type of these silane coupling agents may be used alone or two or more types thereof may be used in combination. Among these silane coupling agents, bis(3-triethoxysilylpropyl)disulfide, bis(3-triethoxysilylpropyl)tetrasulfide, and 3-mercaptopropyltriethoxysilane are preferable from the viewpoint of a large addition effect and cost.

The silane coupling agent is contained in an amount of preferably 0.1 to 30 parts by mass, more preferably 0.5 to 20 parts by mass, and still more preferably 1 to 15 parts by mass with respect to 100 parts by mass of silica. When the content of the silane coupling agent is within the above range, the dispersibility, coupling effect, reinforcing property, and abrasion resistance are improved.

The rubber composition of the present invention may contain, as a softening agent, a resin component such as a process oil such as silicon oil, aromatic oil, TDAE (Treated Distilled Aromatic Extract), MES (Mild Extracted Solvate), RAE (Residual Aromatic Extract), paraffin oil, or naphthene oil, an aliphatic hydrocarbon resin, an alicyclic hydrocarbon resin, a C9-based resin, a rosin-based resin, a coumarone-indene-based resin, or a phenolic resin as necessary for the purpose of improving, for example, processability and fluidity to the extent that the effect of the present invention is not impaired. When the rubber composition of the present invention contains the process oil as a softening agent, the content thereof is preferably less than 50 parts by mass with respect to 100 parts by mass of the solid rubber (A) .

The rubber composition of the present invention may contain an additive such as an anti-aging agent, a wax, an antioxidant, a lubricant, a light stabilizer, a scorch inhibitor, a processing aid, a colorant such as a pigment or a dye, a flame retardant, an antistatic agent, a matting agent, an antiblocking agent, an ultraviolet absorber, a mold release agent, a foaming agent, an antibacterial agent, an antifungal agent, or a fragrance as necessary for the purpose of improving, for example, weather resistance, heat resistance, or oxidation resistance to the extent that the effect of the present invention is not impaired. Examples of the antioxidant include a hindered phenolic compound, a phosphorus-based compound, a lactone-based compound, and a hydroxyl-based compound. Examples of the anti-aging agent include an amine-ketone-based compound, an imidazole-based compound, an amine-based compound, a phenolic compound, a sulfur-based compound, and a phosphorus-based compound. One type of these additives may be used alone or two or more types thereof may be used in combination.

[Method for producing rubber composition]

A method for producing the rubber composition of the present invention is not particularly limited as long as the above components can be uniformly mixed. Examples of an apparatus used for producing the rubber composition include tangential or intermeshing closed-type kneaders such as a kneader ruder, a Brabender, a Banbury mixer, and an internal mixer, a single-screw extruder, a twin-screw extruder, a mixing roll, and a roller. The rubber composition can be produced usually in a temperature range of 70 to 270°C.

[Crosslinked product]

A crosslinked product can be obtained by crosslinking the rubber composition of the present invention. The crosslinking conditions for the rubber composition can be appropriately set according to, for example, the application thereof. For example, when sulfur or a sulfur compound is used as the crosslinking agent and the rubber composition is crosslinked (vulcanized) with a mold, the crosslinking (vulcanization) can be performed at a crosslinking temperature of usually 120 to 200°C and a pressurization condition of usually 0.5 to 2.0 MPa.
The extraction rate of the liquid conjugated diene-based polymer (C) from the crosslinked product is preferably 20 mass% or less, more preferably 15 mass% or less, and still more preferably 10 mass% or less.
The extraction rate can be calculated from the amount of the liquid conjugated diene-based polymer (C) extracted into toluene after 2 g of the crosslinked product is immersed in 400 mL of toluene at 23°C for 48 hours.

[Tire tread and pneumatic tire]

A tire tread is a portion of a tire, and is usually a portion where a tire having a groove pattern called a pattern is in contact with a road surface. The tire tread of the present invention is formed at least partially using the rubber composition (or a crosslinked product of the rubber composition), and has a high elastic modulus, and exhibits excellent low heat generation. The structure of the tire tread of the present invention is not particularly limited, and may be a single layer structure or a multilayer structure, but when the tire tread has a multilayer structure, it is preferable to use the rubber composition (or a crosslinked product of the rubber composition) for a layer in contact with a road surface.
A pneumatic tire is a tire that is used by being filled with air between a tire main body portion constituted by, for example, a part of a tire described later and a rim portion of a wheel, and is the most common tire as a bicycle tire or an automobile tire. The pneumatic tire of the present invention is formed at least partially using the rubber composition or a crosslinked product of the rubber composition, and in particular, a pneumatic tire formed using the tire tread is preferable. In the pneumatic tire of the present invention, since the rubber composition or a crosslinked product of the rubber composition is used at least as a part of the pneumatic tire, a portion formed of the rubber composition has a high elastic modulus, and the pneumatic tire exhibits excellent low heat generation.
Examples of the part of the tire for which the rubber composition (or a crosslinked product of the rubber composition) can be used include a tread (a cap tread, an under tread), a sidewall, a rubber reinforcing layer (such as a liner) for a run-flat tire, a rim cushion, a bead filler, a bead insulation, a bead apex, a clinch apex, a belt, a belt cushion, a breaker, a breaker cushion, a chafer, a chafer pad, and a strip apex.

Examples

Hereinafter, the present invention will be described in more detail with reference to examples, but the present invention is not limited to these examples.
The components used in the present examples and comparative examples are as follows.

<Solid rubber (A)>

· Modified solution-polymerized styrene-butadiene copolymer having Si-containing functional group (A1-1)
HPR850 (Si content derived from Si-containing functional group: 290 ppm, styrene content: 28 mass%, vinyl content: 59 mass%, specific gravity: 0.94; manufactured by ENEOS Materials Corporation)
· Modified solution-polymerized styrene-butadiene copolymer having Si-containing functional group (A1'-1)
HPR355 (Si content derived from Si-containing functional group: 210 ppm, styrene content: 27 mass%, vinyl content: 58 mass%, specific gravity: 0.93; manufactured by ENEOS Materials Corporation)
· Butadiene rubber BR01 (Mw: 550,000, cis-isomer content: 95 mass%, specific gravity: 0.90; manufactured by ENEOS Materials Corporation)

<Filler (B)>

· Silica (B1-1) Zeosil Premium 200MP (wet silica (precipitated silica) specific surface area (CTAB): 200 $m^2$/g, average particle size: 10 nm, specific gravity: 2.0; manufactured by Solvay S.A.)
· Silica (B1'-1) Ultrasil 7000GR (wet silica (precipitated silica) specific surface area (CTAB): 160 $m^2$/g, average particle

size: 14 nm, specific gravity: 2.0; manufactured by Evonik Industries AG)
· Carbon black (B2-1) SEAST 3 (furnace black HAF nitrogen adsorption specific surface area: 79 $m^2$/g, specific gravity: 1.8; manufactured by Tokai Carbon Co., Ltd.)

The specific surface area (CTAB) of silica was measured according to JIS K 6217-3:2001. Specifically, CTAB was adsorbed on the silica surface in a CTAB solution, and the amount of CTAB remaining in the solution without being adsorbed was quantified by titration with a sodium di-2-ethylhexyl sulfosuccinate solution to calculate the amount of CTAB adsorbed on silica, and this was defined as the specific surface area (CTAB).

<Liquid conjugated diene-based polymer (C)>

· Liquid conjugated diene-based polymers (C-1), (C-2), and (C-3) obtained in Production Examples 1, 2, and 3 described later

[Other components]

<Crosslinking agent (D)>

· Sulfur: MUCRON OT-20 (insoluble sulfur, specific gravity: 1.6; manufactured by Shikoku Chemicals Corporation)

<Vulcanization accelerator (E)>

· Vulcanization accelerator (1): Nocceler D (specific gravity: 1.2; manufactured by Ouchi Shinko Chemical Industrial Co., Ltd.)
· Vulcanization accelerator (2): Nocceler CZ-G (specific gravity: 1.3; manufactured by Ouchi Shinko Chemical Industrial Co., Ltd.)
· Vulcanization accelerator (3): Nocceler TBT-N (specific gravity: 1.1; manufactured by Ouchi Shinko Chemical Industrial Co., Ltd.)

<Vulcanization aid (F)>

· Zinc flower: zinc oxide (specific gravity: 5.6; (manufactured by Sakai Chemical Industry Co., Ltd.)
· Stearic acid: Lunac S-20 (specific gravity: 0.84; manufactured by Kao Corporation)

<Additive>

· Silane coupling agent: Si-69 (specific gravity: 1.1; manufactured by Evonik Industries AG)
· TDAE: VivaTec 500 (specific gravity: 0.96; manufactured by H & R International GmbH)
· Anti-aging agent: Nocrac 6C (specific gravity: 1.1; manufactured by Ouchi Shinko Chemical Industrial Co., Ltd.)
· Wax: Santite S (specific gravity: 0.93; manufactured by Seiko Chemical Co., Ltd.)

Production Example 1: Production of liquid conjugated diene-based polymer (C-1)

A sufficiently dried pressure resistant container was purged with nitrogen, and charged with 600 g of hexane and 44.9 g of n-butyl lithium (17 mass% hexane solution), the temperature was raised to 70°C, and then 2,050 g of isoprene was added thereto, and polymerization was performed for 1 hour while the polymerization temperature was controlled to 70°C under stirring conditions. Thereafter, methanol was added thereto to terminate the polymerization reaction to obtain a polymerization solution (2,695 g). Water was added to the obtained polymerization solution, followed by stirring to wash

the polymerization solution with water. Stirring was completed, and it was checked that the polymerization solution phase and the aqueous phase were separated, and then, water was separated. The polymerization solution after completion of washing was vacuum-dried at 70°C for 24 hours to obtain a liquid conjugated diene-based polymer (C-1) being liquid polyisoprene (liquid isoprene homopolymer).

Production Example 2: Production of liquid conjugated diene-based polymer (C-2)

A sufficiently dried pressure resistant container was purged with nitrogen, and charged with 600 g of hexane and 13.9 g of n-butyl lithium (17 mass% hexane solution), the temperature was raised to 70°C, and then 1,370 g of isoprene was added thereto, and polymerization was performed for 1 hour while the polymerization temperature was controlled to 70°C under stirring conditions. Thereafter, methanol was added thereto to terminate the polymerization reaction to obtain a polymerization solution (1,980 g). Water was added to the obtained polymerization solution, followed by stirring to wash the polymerization solution with water. Stirring was completed, and it was checked that the polymerization solution phase and the aqueous phase were separated, and then, water was separated. The polymerization solution after completion of washing was vacuum-dried at 70°C for 24 hours to obtain a liquid conjugated diene-based polymer (C-2) being liquid polyisoprene (liquid isoprene homopolymer).

Production Example 3: Production of liquid conjugated diene-based polymer (C-3)

A sufficiently dried pressure resistant container was purged with nitrogen, and charged with 1,200 g of hexane and 11 g of sec-butyl lithium (10.5 mass% cyclohexane solution), and the temperature was raised to 70°C, and then 1,200 g of a mixture of butadiene (a) and β-farnesene (b) (480 g of butadiene (a) and 720 g of β-farnesene (b) were mixed in a cylinder) prepared in advance was added thereto, and polymerization was performed for 1 hour. Thereafter, methanol was added thereto to terminate the polymerization reaction to obtain a polymerization solution (2,400 g). Water was added to the obtained polymerization solution, followed by stirring to wash the polymerization solution with water. Stirring was completed, and it was checked that the polymerization solution phase and the aqueous phase were separated, and then, water was separated. The polymerization solution after completion of washing was vacuum-dried at 70°C for 24 hours to obtain a liquid conjugated diene-based polymer (C-3) as a liquid butadiene-farnesene copolymer (liquid butadiene-farnesene random copolymer).

Measurement methods and calculation methods for physical properties of, for example, the liquid conjugated diene-based polymers obtained in these production examples are as follows.

(Measurement method for weight average molecular weight (Mw))

The Mw of, for example, the liquid conjugated diene-based polymer (C) was determined as the molecular weight in terms of standard polystyrene by gel permeation chromatography (GPC). A measurement apparatus and measurement conditions are as follows.

- Apparatus: GPC apparatus "HLC-8320 GPC" manufactured by Tosoh Corporation
- Separation column: "TSKgel SuperHZ4000 × 2" manufactured by Tosoh Corporation
- Eluent: tetrahydrofuran
- Eluent flow rate: 0.35 mL/min
- Sample concentration: 5 mg/10 mL
- Column temperature: 40°C

(Vinyl content)

The vinyl content of, for example, the liquid conjugated diene-based polymer (C) was measured using $^1$H-NMR (500 MHz) manufactured by JEOL Ltd. at a concentration of sample/deuterated chloroform = 50 mg/1 mL and a cumulative number of 32 times. The vinyl content was calculated from an area ratio of peaks derived from conjugated diene units bonded through a 1,2-bond, a 3,4-bond (a case other than farnesene), and a 3,13-bond (a case of farnesene) to peaks derived from conjugated diene units bonded through a 1,4-bond (a case other than farnesene) and a 1,13-bond (a case of farnesene) in the obtained spectrum.

(Glass transition temperature (Tg))

In an aluminum pan, 10 mg of a sample of, for example, the liquid conjugated diene-based polymer (C) was taken and subjected to measurement by differential scanning calorimetry (DSC) under a temperature rising rate condition of

10°C/min to obtain a thermogram. The value of the peak top of DDSC of this thermogram was defined as the glass transition temperature (Tg) of the sample of, for example, the liquid conjugated diene-based polymer (C).

(Melt viscosity at 38°C)

The melt viscosity at 38°C of, for example, the liquid conjugated diene-based polymer (C) was measured with a Brookfield viscometer (manufactured by BROOKFIELD ENGINEERING LABS. INC.).

(Specific gravity)

The specific gravity of the liquid conjugated diene-based polymer (C) was measured by the method described in JIS K 2249-2:2011.

(Content of Si derived from Si-containing functional group of modified solution-polymerized styrene-butadiene copolymer (A1) having Si-containing functional group)

With respect to the modified solution-polymerized styrene-butadiene copolymer having a Si-containing functional group used in examples and comparative examples, the content of Si derived from the Si-containing functional group was measured by ICP emission spectrometry. The apparatus and the evaluation method are as follows.

· Apparatus: "iCAP 6500 Duo", manufactured by Thermo Fisher Scientific, Inc.
· Method for adjusting sample: a sample (2 g) was ashed by adding nitric acid and sulfuric acid and heating. Subsequently, sodium carbonate was added for melting, and then ultrapure water was added for dissolution. The solution was filtered, and the solution diluted by a given factor was analyzed with an ICP emission spectrometer to obtain the content of Si derived from the Si-containing functional group. The obtained content and the proportion of the modified solution-polymerized styrene-butadiene copolymer having a Si-containing functional group contained in the solid rubber (A) were used to calculate the average content X of Si in the solid rubber (A). The results are shown in Table 2.

(Total specific surface area Y of silica (B1) per 1 $cm^3$ of rubber composition)

The total specific surface area Y of the silica (B1) per 1 $cm^3$ of the rubber compositions of examples and comparative examples was determined from the following formula (2) where the volume of the rubber composition calculated from the blending amount and specific gravity of each component contained in the rubber composition was denoted by H $cm^3$, the specific surface area (CTAB) of silica contained in the rubber composition having the volume H $cm^3$ was denoted by I $m^2/g$, and the weight of the silica was denoted by J g. The results are shown in Table 2.

$$Y = (I \times J)/H \quad (2)$$

(Value of X × Y)

A value of X × Y was calculated by multiplying X and Y obtained by the above-described method. The results are shown in Table 2.

The physical properties of the liquid conjugated diene-based polymers (C-1), (C-2), and (C-3) obtained in Production Examples 1 to 3 are summarized in Table 1 below.

[Table 1]

| | weight average molecular weight (×$10^3$) | Vinyl content (mol%) | Tg (°C) | Melt viscosity (38°C) (Pa·s) | Specific gravity |
|---|---|---|---|---|---|
| Liquid conjugated diene-based polymer (C-1) | 28 | 7 | -63 | 70 | 0.91 |
| Liquid conjugated diene-based polymer (C-2) | 54 | 7 | -63 | 500 | 0.91 |
| Liquid conjugated diene-based polymer (C-3) | 100 | 10 | -78 | 520 | 0.90 |

Examples 1 to 3 and Comparative Examples 1 to 4

As described in detail below, each component was kneaded according to the blending ratio (parts by mass) shown in Table 2 to produce a rubber composition. At that time, first, a step of mixing components other than the crosslinking agent (vulcanizing agent) and the vulcanization accelerator was performed in two steps (NP1, NP2) to obtain an unvulcanized rubber mixture (unvulcanized rubber mixture (2)). Thereafter, a rubber composition was produced by a step (FM) of further kneading the crosslinking agent and the vulcanization accelerator with the unvulcanized rubber mixture (2). The dispersibility of the filler (B) (particularly, silica (B1)) is enhanced by performing the step of mixing components other than the crosslinking agent (vulcanizing agent) and the vulcanization accelerator twice.

[Kneading step (NP1)]

According to the blending ratios (parts by mass) shown in Table 2, the solid rubber (A), the filler (B), the liquid conjugated diene-based polymer (C), TDAE, the silane coupling agent, zinc flower, stearic acid, a wax, and an anti-aging agent were each put into a closed-type Banbury mixer, and kneaded for 4 minutes with the starting temperature controlled to 60°C and the resin temperature controlled to 155 to 160°C, and then the resultant was taken out of the mixer and cooled to room temperature to obtain an unvulcanized rubber mixture (1).

[Kneading step (NP2)]

The unvulcanized rubber mixture (1) obtained in the kneading step (NP1) was put into the closed-type Banbury mixer again, and kneaded for 3 minutes with the starting temperature controlled to 60°C and the resin temperature controlled to 155 to 160°C, and then the resultant was taken out of the mixer and cooled to room temperature to obtain an unvulcanized rubber mixture (2).

[Kneading step (FM)]

The unvulcanized rubber mixture (2) obtained in the kneading step (NP2) was put into the Banbury mixer again, a crosslinking agent (vulcanizing agent) and a vulcanization accelerator were added thereto, and the mixture was kneaded for 75 seconds so that the starting temperature was 50°C and the attainment temperature was 100°C to obtain a rubber composition.

In each of examples and comparative examples, physical properties were evaluated as follows. The evaluation results of the physical properties are shown in Table 2.

(Mooney viscosity)

In accordance with JIS K 6300-1:2013, the Mooney viscosity ($ML_{1+4}$) of the rubber composition before vulcanization obtained through the kneading steps (NP1), (NP2) and (FM) was measured at 130°C. The numerical value of each of examples and comparative examples in Table 2 is a relative value when the value of Comparative Example 1 is taken as 100. The smaller the numerical value, the better the processability of the rubber composition.

(Rupture elongation of unvulcanized rubber mixture (1))

A sample was prepared from the unvulcanized rubber mixture (1) obtained through the kneading step (NP1), and the rupture elongation of this sample was evaluated.

The unvulcanized rubber mixture (1) obtained through the kneading step (NP1) was press-molded (100°C, 10 min) to produce an unvulcanized rubber sheet (thickness: 2 mm). A JIS dumbbell-shaped No. 3 test piece was punched out from the produced unvulcanized rubber sheet, and the tensile rupture elongation was measured at a tensile speed of 50 cm/min using a tensile tester manufactured by Instron Corporation.

The numerical value of each of examples and comparative examples is a relative value when the value of Comparative Example 1 is taken as 100. As the numerical value is larger, the sheet in an unvulcanized state is less likely to rupture, and a decrease in productivity can be prevented.

(Low fuel consumption performance (tan$\delta$ at 60°C), elastic modulus at 25°C, and elastic modulus at 60°C)

The rubber compositions produced in examples and comparative examples and obtained through the kneading steps (NP1), (NP2), and (FM) were press-molded (160°C, 10 to 30 min) to produce vulcanized rubber sheets (thickness: 2 mm).

A test piece of 40 mm length × 5 mm width was cut out from the obtained vulcanized rubber sheet, and measurement was performed for tanδ at a measurement temperature of 60°C, and E' (elastic modulus) at measurement temperatures of 25°C and 60°C under the conditions of a frequency of 10 Hz, a static strain of 10%, and a dynamic strain of 2% using a dynamic viscoelasticity measurement apparatus manufactured by GABO. The numerical value of each of examples and comparative examples is a relative value when the value of Comparative Example 1 in Table 2 is taken as 100. The smaller the numerical value of tanδ, the better the low fuel consumption performance of the rubber composition (vulcanized rubber sheet), and the larger the numerical value of E', the higher the elasticity of the obtained vulcanized rubber sheet.

[Table 2]

Table 2

| | | | Example 1 | Example 2 | Example 3 |
|---|---|---|---|---|---|
| Blending ratio <parts by mass> | Component (A) | Modified solution-polymerized styrene-butadiene rubber (A1-1) | 83 | 83 | 80 |
| | | Modified solution-polymerized styrene-butadiene rubber (A1'-1) | | | |
| | | Butadiene rubber | 17 | 17 | 20 |
| | Component (B) | Silica (B1-1) | 80 | 80 | 80 |
| | | Silica (B1'-1) | | | |
| | | Carbon black | 5 | 5 | 5 |
| | Component (C) | Liquid conjugated diene-based polymer (C-1) | 10 | | |
| | | Liquid conjugated diene-based polymer (C-2) | | 10 | |
| | | Liquid conjugated diene-based polymer (C-3) | | | 10 |
| | Other components | Silane coupling agent | 8 | 8 | 8 |
| | | TDAE | 19 | 19 | 21 |
| | | Zinc flower | 3 | 3 | 3 |
| | | Stearic acid | 2.5 | 2.5 | 2.5 |
| | | Anti-aging agent | 2 | 2 | 2 |
| | | Wax | 2.5 | 2.5 | 2.5 |
| | | Vulcanization accelerator (1) | 0.5 | 0.5 | 0.5 |
| | | Vulcanization accelerator (2) | 0.35 | 0.35 | 0.35 |
| | | Vulcanization accelerator (3) | 1.5 | 1.5 | 1.5 |
| | | Sulfur | 3.14 | 3.14 | 3.5 |

(continued)

| | | Example 1 | Example 2 | Example 3 |
|---|---|---|---|---|
| Physical properties | Average content of Si in solid rubber (A) X (ppm) | 241 | 241 | 232 |
| | Total specific surface area of silica (B1) per 1 $cm^3$ of rubber composition Y ($m^2/cm^3$) | 80.1 | 80.1 | 79.0 |
| | $X \times Y$ | 19300 | 19300 | 18300 |
| | Mooney viscosity (relative value) | 87 | 88 | 87 |
| | Rupture elongation of unvulcanized rubber mixture (1) (relative value) | 110 | 118 | 104 |
| | Low fuel consumption performance (tan$\delta$ at 60°C (relative value)) | 100 | 96 | 84 |
| | Elastic modulus at 25°C | 109 | 112 | 109 |
| | Elastic modulus at 60°C | 108 | 113 | 116 |

Table 2 (continued)

| | | | Comparative Example 1 | Comparative Example 2 | Comparative Example 3 | Comparative Example 4 |
|---|---|---|---|---|---|---|
| Blending ratio <parts by mass> | Component (A) | Modified solution-polymerized styrene-butadiene rubber (A1-1) | 80 | 83 | | |
| | | Modified solution-polymerized styrene-butadiene rubber (A1'-1) | | | 83 | 83 |
| | | Butadiene rubber | 20 | 17 | 17 | 17 |
| | Component (B) | Silica (B1-1) | 80 | | 80 | |
| | | Silica (B1'-1) | | 80 | | 80 |
| | | Carbon black | 5 | 5 | 5 | 5 |
| | Component (C) | Liquid conjugated diene-based polymer (C-1) | | | | |
| | | Liquid conjugated diene-based polymer (C-2) | | 10 | 10 | 10 |
| | | Liquid conjugated diene-based polymer (C-3) | | | | |
| | | Silane coupling agent | 8 | 8 | 8 | 8 |
| | | TDAE | 28 | 19 | 19 | 19 |
| | | Zinc flower | 3 | 3 | 3 | 3 |
| | | Stearic acid | 2.5 | 2.5 | 2.5 | 2.5 |
| | | Anti-aging agent | 2 | 2 | 2 | 2 |

(continued)

| | | | Comparative Example 1 | Comparative Example 2 | Comparative Example 3 | Comparative Example 4 |
|---|---|---|---|---|---|---|
| | Other components | Wax | 2.5 | 2.5 | 2.5 | 2.5 |
| | | Vulcanization accelerator (1) | 0.5 | 0.5 | 0.5 | 0.5 |
| | | Vulcanization accelerator (2) | 0.35 | 0.35 | 0.35 | 0.35 |
| | | Vulcanization accelerator (3) | 1.5 | 1.5 | 1.5 | 1.5 |
| | | Sulfur | 1.9 | 3.14 | 3.14 | 3.14 |
| Physical properties | | Average content of Si in solid rubber (A) X (ppm) | 232 | 241 | 174 | 174 |
| | | Total specific surface area of silica (B1) per 1 $cm^3$ of rubber composition Y ($m^2/cm^3$) | 80.9 | 64.1 | 80.1 | 64.1 |
| | | X × Y | 18800 | 15400 | 14000 | 11200 |
| | | Mooney viscosity (relative value) | 100 | 69 | 65 | 52 |
| | | Rupture elongation of unvulcanized rubber mixture (1) (relative value) | 100 | 186 | 108 | 132 |
| | | Low fuel consumption performance (tanδ at 60°C (relative value)) | 100 | 86 | 111 | 99 |
| | | Elastic modulus at 25°C | 100 | 94 | 111 | 96 |
| | | Elastic modulus at 60°C | 100 | 99 | 111 | 98 |

In Examples 1 to 3 with respect to Comparative Example 1, the elasticity is high while the processability and productivity are improved by blending a liquid conjugated diene-based polymer, and the low fuel consumption performance is also tends to be equal to or better. Further, in Examples 1 to 3 with respect to Comparative Examples 2 to 4, the low fuel consumption performance is excellent without reducing the elastic modulus while the productivity is improved by blending a modified solution-polymerized styrene-butadiene copolymer in which the content of Si derived from a Si-containing functional group is appropriate or silica having an appropriate specific surface area.

Industrial Applicability

The rubber composition of the present invention is excellent in processability even when the rubber composition contains a highly modified solution-polymerized styrene-butadiene copolymer having a high Si-containing functional group concentration as a solid rubber component, and further contains a fine filler as a filler. Further, the rubber composition or a crosslinked product of the rubber composition has an inherent good elastic modulus. Therefore, it can be suitably used in, for example, tire applications, and applications to industrial members such as industrial belts and

industrial rubber hoses, and is useful. In addition, use of the rubber composition or a crosslinked product of the rubber composition in, for example, tire applications is useful because the low fuel consumption performance is also excellent.

## Claims

1. A rubber composition, comprising 60 to 150 parts by mass of silica (B1) as a filler (B) and 5 to 30 parts by mass of a liquid conjugated diene-based polymer (C) having a weight average molecular weight in a range of 3,000 to 200,000 with respect to 100 parts by mass of a solid rubber (A) containing 60 mass% or more of a modified solution-polymerized styrene-butadiene copolymer (A1) having a Si-containing functional group, wherein

   a content of Si derived from the Si-containing functional group contained in the modified solution-polymerized styrene-butadiene copolymer (A1) is 220 to 800 ppm, and
   the silica (B1) has a specific surface area (CTAB) of 180 to 500 $m^2/g$.

2. The rubber composition according to claim 1, wherein when an average content of Si derived from the Si-containing functional group in the solid rubber (A) is denoted by X ppm, and a total specific surface area of the silica (B1) per 1 $cm^3$ of the rubber composition is denoted by Y $m^2/cm^3$, a value of $X \times Y$ satisfies 9,000 or more.

3. The rubber composition according to claim 1 or 2,
   wherein the liquid conjugated diene-based polymer (C) has a melt viscosity at 38°C of 0.1 to 2,000 Pa·s.

4. The rubber composition according to any one of claims 1 to 3, wherein the silica (B1) has an average particle size of 0.5 to 200 nm.

5. The rubber composition according to any one of claims 1 to 4, wherein a conjugated diene to be a unit derived from a conjugated diene contained in the liquid conjugated diene-based polymer (C) contains at least one type selected from a group consisting of isoprene, butadiene, and farnesene.

6. The rubber composition according to any one of claims 1 to 5, wherein the liquid conjugated diene-based polymer (C) is at least one type selected from a group consisting of liquid polyisoprene and a liquid butadiene-farnesene copolymer.

7. The rubber composition according to any one of claims 1 to 6, wherein the liquid conjugated diene-based polymer (C) is liquid polyisoprene.

8. The rubber composition according to any one of claims 1 to 7, further comprising carbon black (B2) as the filler (B).

9. A crosslinked product, obtained by crosslinking the rubber composition according to any one of claims 1 to 8.

10. A tire tread, formed at least partially using the rubber composition according to any one of claims 1 to 8.

11. A pneumatic tire, formed at least partially using the rubber composition according to any one of claims 1 to 8.

**INTERNATIONAL SEARCH REPORT**

International application No.
**PCT/JP2024/001121**

**A. CLASSIFICATION OF SUBJECT MATTER**

***C08L 15/00***(2006.01)i; ***B60C 1/00***(2006.01)i; ***C08K 3/04***(2006.01)i; ***C08K 3/36***(2006.01)i; ***C08L 9/00***(2006.01)i
FI: C08L15/00; C08K3/36; C08L9/00; C08K3/04; B60C1/00 A

According to International Patent Classification (IPC) or to both national classification and IPC

**B. FIELDS SEARCHED**

Minimum documentation searched (classification system followed by classification symbols)

C08L15/00; B60C1/00; C08K3/04; C08K3/36; C08L9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2009/133888 A1 (BRIDGESTONE CORPORATION) 05 November 2009 (2009-11-05) claims, paragraphs [0006], [0082], each example | 1-11 |
| Y | JP 2021-172722 A (ASAHI KASEI KABUSHIKI KAISHA) 01 November 2021 (2021-11-01) claims, paragraphs [0011], [0026]-[0027], [0210] | 1-11 |
| A | WO 2022/196643 A1 (ENEOS MATERIALS CORPORATION) 22 September 2022 (2022-09-22) paragraphs [0077]-[0084] | 1-11 |
| A | WO 2019/044892 A1 (KURARAY CO., LTD.) 07 March 2019 (2019-03-07) | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/001121**

| Patent document cited in search report | Publication date (day/month/year) | Patent family member(s) | Publication date (day/month/year) |
|---|---|---|---|
| WO 2009/133888 A1 | 05 November 2009 | US 2011/0160388 A1<br>claims, paragraphs [0008], [0126]-[0129], each example<br>EP 2277940 A1<br>CN 102083889 A<br>KR 10-2011-0018333 A | |
| JP 2021-172722 A | 01 November 2021 | (Family: none) | |
| WO 2022/196643 A1 | 22 September 2022 | CN 117015559 A<br>KR 10-2023-0156349 A<br>TW 202248250 A | |
| WO 2019/044892 A1 | 07 March 2019 | US 2020/0332090 A1<br>EP 3677636 A1<br>CN 111032771 A<br>KR 10-2020-0045506 A<br>TW 201920420 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009133888 A